# EUROPEAN PATENT APPLICATION

(11) **EP 4 564 151 A1**
(43) Date of publication of application: **04.06.2025**
(21) Application number: 24189709.9
(22) Date of filing: 19.07.2024
(51) Int. Cl.: G06F 3/12, H04N 1/00

(54) **INFORMATION PROCESSING SYSTEM AND PROGRAM**

(30) Priority: 30.11.2023 JP 2023203100; 13.03.2024 JP 2024039273
(71) Applicant: FUJIFILM Business Innovation Corp., Minato-ku Tokyo (JP)
(72) Inventor: OHIRA, Yoshie, Kanagawa (JP); KIKUMOTO, Takashi, Kanagawa (JP); ISHIKAWA, Shogo, Kanagawa (JP)
(74) Representative: Haseltine Lake Kempner LLP

(57) **Abstract**

An information processing system includes a processor configured to: receive a setting that sets to a first threshold value an inspection threshold of an inspection that is performed on a printed material printed by a printer and including multiple pages; identify first reprint pages including at least a page that is determined to be faultily printed through the inspection that is performed in accordance with the first threshold value; and display a first consumed amount serving as a consumed amount of a consumable item that is used in printing the first reprint pages.

## Description

### Background

### (i) Technical Field

The present disclosure relates to an information processing system and a program.

### (ii) Related Art

Japanese Unexamined Patent Application Publication No. 2020-082421 discloses an image inspection report making apparatus that displays in a results report only a fault that a user is to recognize. The image inspection report making apparatus calculates a difference level indicating the degree of difference between an inspection image and a read image and determines whether to display the difference in the results report by comparing the calculated difference level with a standard difference level.

Japanese Unexamined Patent Application Publication No. 2020-205567 discloses an image processing apparatus. The image processing apparatus detects an image fault by analyzing a read image of printed materials, discharges the printed materials with a passed product differentiated from a failed product. If a modification of an inspection threshold of the image fault and/or a modification of an inspection item is accepted, the information processing apparatus performs re-determination on the discharged printed materials and makes a notification of an output location of the printed material that is modified in the pass/fail determination.

A printer may create a printed material including multiple pages. An inspection apparatus may check the printed material for the presence of stains on a per page basis and may determine a page to be faulty if a stain larger than a threshold set in a given parameter is detected on the page. In such a case, the quality of the printed material is higher as an inspection threshold is lower. The inspection threshold serves as a criterion according to which a determination as to whether the printed material is normal or not is made. Reprinting a page determined to be faulty may lead to an increase in a consumed amount of a consumable item, such as printing paper and toner. Conversely, if the inspection threshold is set to be higher, the quality of the printed material becomes lower. When the inspection threshold is set, the user may have difficulty finding out the consumed amount of the consumable item used in the reprinting.

### Summary

Accordingly, it is an object of the present disclosure to provide an information processing system and a program that enable a user to recognize a consumed amount of a consumable item when an inspection threshold is set on an inspection performed on a printed material.

According to a first aspect of the present disclosure, there is provided an information processing system including a processor configured to: receive a setting that sets to a first threshold value an inspection threshold of an inspection that is performed on a printed material printed by a printer and including multiple pages; identify first reprint pages including at least a page that is determined to be faultily printed through the inspection that is performed in accordance with the first threshold value; and display a first consumed amount serving as a consumed amount of a consumable item that is used in printing the first reprint pages.

In the information processing system according to a second aspect of the disclosure in view of the first aspect, the processor is configured to display on the same screen a display that receives the setting of the inspection threshold and a display of the first consumed amount.

In the information processing system according to a third aspect of the disclosure in view of one of the first and second aspects, the first reprint pages include a page that is printed by the printer and follows the page that is determined to be faultily printed through the inspection performed in accordance with the first threshold value.

In the information processing system according to a fourth aspect of the disclosure in view of one of the first through third aspects, the processor is configured to: display a first page configuration of a page that is printed when the setting with the inspection threshold set to the first threshold value is received, wherein the first page configuration includes the first reprint pages.

In the information processing system according to a fifth aspect of the disclosure in view of one of the first and fourth aspects, the processor is configured to receive the setting of the inspection threshold on each page of the printed material and inspect the page in accordance with the received inspection threshold on the page.

In the information processing system according to a sixth aspect of the disclosure in view of the fourth aspect, the processor is configured to display a first waste paper rate serving as a ratio of a page count of the first reprint pages to a page count of the first page configuration.

In the information processing system according to a seventh aspect of the disclosure in view of the sixth aspect, the processor is configured to: store the first threshold value and the first waste paper rate in association with each other; and display in accordance with the first waste paper rate the consumed amount of the consumable item that is estimated when a new printed material is inspected in accordance with the first threshold value.

According to an eighth aspect of the present disclosure, there is provided an information processing system including: a processor configured to: receive a setting that sets to a first threshold value an inspection threshold of an inspection that is performed on a printed material printed by a printer and including multiple pages; identify first reprint pages including at least a page that is determined to be faultily printed through the inspection that is performed in accordance with the first threshold value; receive a setting that sets the inspection threshold to a second threshold value; identify second reprint pages including at least a page that is determined to be faultily printed through the inspection that is performed in accordance with the second threshold value; and display a difference between a first consumed amount serving as a consumed amount of a consumable item used in printing the first reprint pages and a second consumed amount serving as a consumed amount of the consumable item used in printing the second reprint pages.

In the information processing system according to a ninth aspect of the disclosure in view of the eighth aspect, the processor is configured to display on the same screen a display that receives the setting of the inspection threshold and a display of the difference.

In the information processing system according to a tenth aspect of the disclosure in view of one of the eighth and ninth aspects, the first reprint pages include a page that is printed by the printer and follows the page that is determined to be faultily printed through the inspection performed in accordance with the first threshold value, and the second reprint pages include a page that is printed by the printer and follows the page that is determined to be faultily printed through the inspection performed in accordance with the second threshold value.

In the information processing system according to an eleventh aspect of the disclosure in view of one of the eighth through tenth aspects, the processor is configured to: display a first page configuration of a page that is printed when the setting with the inspection threshold set to the first threshold value is received; display a second page configuration of a page that is printed when the setting with the inspection threshold set to the second threshold value is received, wherein the first page configuration includes the first reprint pages, and wherein the second page configuration includes the second reprint pages.

In the information processing system according to a twelfth aspect of the disclosure in view of one of the eighth through eleventh aspects, the processor is configured to receive the setting of the inspection threshold on each page of the printed material and inspect the page in accordance with the received inspection threshold on the page.

In the information processing system according to a thirteenth aspect of the disclosure in view of the eleventh aspect, the processor is configured to display a difference between a first waste paper rate serving as a ratio of a page count of the first reprint pages to a page count of the first page configuration and a second waste paper rate serving as a ratio of a page count of the second reprint pages to a page count of the second page configuration.

In the information processing system according to a fourteenth aspect of the disclosure in view of the thirteenth aspect, the processor is configured to: store the first threshold value and the first waste paper rate in association with each other; and display in accordance with the first waste paper rate the consumed amount of the consumable item that is estimated when a new printed material is inspected in accordance with the first threshold value.

According to a fifteenth aspect of the present disclosure, there is provided a program causing a computer to execute a process including: receiving a setting that sets to a first threshold value an inspection threshold of an inspection that is performed on a printed material printed by a printer and including multiple pages; identifying first reprint pages including at least a page that is determined to be faultily printed through the inspection that is performed in accordance with the first threshold value; and displaying a first consumed amount serving as a consumed amount of a consumable item that is used in printing the first reprint pages.

According to a sixteenth aspect of the present disclosure, there is provided a program causing a computer to execute a process including: receiving a setting that sets to a first threshold value an inspection threshold of an inspection that is performed on a printed material printed by a printer and including multiple pages; identifying first reprint pages including at least a page that is determined to be faultily printed through the inspection that is performed in accordance with the first threshold value; receiving a setting that sets the inspection threshold to a second threshold value; identifying second reprint pages including at least a page that is determined to be faultily printed through an inspection that is performed in accordance with the second threshold value; and displaying a difference between a first consumed amount serving as a consumed amount of a consumable item used in printing the first reprint pages and a second consumed amount serving as a consumed amount of the consumable item used in printing the second reprint pages.

In the information processing system according to a seventeenth aspect of the disclosure in view of the first aspect, the processor is configured to: receive information on a new print job; and identify the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.

In the information processing system according to an eighteenth aspect of the disclosure in view of the seventeenth aspect, the information on the print job includes information on a page configurating the print job, and the information on the new print job includes information on a page configurating the new print job.

In the information processing system according to a nineteenth aspect of the disclosure in view of the eighteenth aspect, the information on the page configurating the print job includes information on an image density, information on an object or information on a print setting on the page configurating the print job.

In the information processing system according to a twentieth aspect of the disclosure in view of the eighteenth aspect, the information on the print job includes information on a type of a paper sheet used in the print job or information on a printer performing the print job, and the information on the new print job includes information on a type of a paper sheet used in the new print job or information on a printer performing the new print job.

In the information processing system according to a twenty-first aspect of the disclosure in view of one of the seventeenth through twentieth aspects, a result of the inspection of the print job includes a probability at which each page configurating the print job is determined to be faultily printed, the result of the inspection of the new print job includes a probability at which each page configurating the new print job is determined to be faultily printed, and the processor is configured to identify the first reprint pages in accordance with the number of copies of the new print job and the probability at which the page configurating the new print job is determined to be faultily printed.

In the information processing system according to a twenty-second aspect of the disclosure in view of the twenty-first aspect, the processor is configured to output the probability at which the page configurating the new print job is determined to be faultily printed, by inputting the information on the received new print job and the first threshold value to the learned model that is learned in advance such that the result of the inspection of the print job is output when the information on the print job and the threshold value of the inspection of the print job are input to the learned model.

In the program according to a twenty-third aspect of the disclosure in view of the fifteenth aspect, the process further includes receiving information on a new print job, wherein identifying the first reprint pages including at least the page that is determined to be faultily printed through the inspection that is performed in accordance with the first threshold value includes identifying the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.

In the information processing system according to the first aspect of the disclosure, the consumed amount of the consumable item used in reprinting may be recognized when the inspection threshold is set.

In the information processing system according to the second aspect of the disclosure, the inspection threshold may be set with the consumed amount of the consumable item used in the reprinting being verified.

In the information processing system according to the third aspect of the disclosure, the consumed amount of the consumable item may be recognized when both the page determined to be faultily printed and the subsequent page are reprinted.

In the information processing system according to the fourth aspect of the disclosure, the configuration of the page to be printed may be recognized when the inspection threshold is set.

In the information processing system according to the fifth aspect of the disclosure, the inspection matching the page may be performed.

In the information processing system according to the sixth aspect of the disclosure, the waste paper rate may be recognized when the inspection threshold is set.

In the information processing system according to the seventh aspect of the disclosure, the estimated consumed amount of the consumable item may be recognized before the printing of a new print product is performed.

In the information processing system according to the eighth aspect of the disclosure, how the consumed amount of the consumable item varies is recognized when the inspection threshold is modified.

In the information processing system according to the ninth aspect of the disclosure, the inspection threshold may be modified with the difference between the consumed amounts of the consumable item used in the reprinting being verified.

In the information processing system according to the tenth aspect of the disclosure, the difference between the consumed amounts of the consumable item used in the reprinting may be recognized when both the page determined to be faultily printed and the subsequent page are reprinted.

In the information processing system according to the eleventh aspect of the disclosure, a change in the configuration of the page to be printed in response to the modification of the inspection threshold may be recognized.

In the information processing system according to the twelfth aspect of the disclosure, the inspection threshold may be set in view of the page.

In the information processing system according to the thirteenth aspect of the disclosure, the difference between the waste paper rates may be recognized when the inspection threshold is modified.

In the information processing system according to the fourteenth aspect of the disclosure, the estimated consumed amount of the consumable item may be recognized before the printing of the new print product is performed.

In the program according to the fifteenth aspect of the disclosure, the consumed amount of the consumable item used in the reprinting may be recognized when the inspection threshold is set.

In the program according to the sixteenth aspect of the disclosure, how the consumed amount of the consumable item varies with the inspection threshold modified may be recognized.

In the information processing system according to the seventeenth aspect of the disclosure, the reprint pages may be identified without inspecting each page of the new print job.

In the information processing system according to the eighteenth aspect of the disclosure, the reprint pages may be identified in accordance with the information on the page configurating the print job without inspecting the page of the new print job.

In the information processing system according to the nineteenth aspect of the disclosure, the reprint pages may be identified without inspecting each page of the new print job in accordance with the information on the image density, the information on the object or the information on the print setting on each page configurating the print job.

In the information processing system according to the twentieth aspect of the disclosure, the reprint pages may be identified without inspecting each page of the new print job in accordance with the information on the type of the paper sheet used in the print job or the information on the printer performing the print job.

In the information processing system according to the twenty-first aspect of the disclosure, the reprint pages may be identified without inspecting each page of the new print job in accordance with the probability at which the page configurating the new print job is determined to be faultily printed.

In the information processing system according to the twenty-second aspect of the disclosure, the probability at which each page configurating the new print job is determined to be faultily printed may be output without inspecting each page of the new print job.

In the program according to the twenty-third aspect of the disclosure, the reprint pages may be identified without inspecting each page of the new print job.

### Brief Description of the Drawings

Exemplary embodiment of the present disclosure will be described in detail based on the following figures, wherein:
Fig. 1 illustrates a system configuration of an image forming system of an exemplary embodiment of the disclosure;
Fig. 2 illustrates a reprinting operation that is performed in response to the detection of a print fault on page 4 when ten pages are printed on paper sheets having a sheet size of A4;
Fig. 3 illustrates an example of a remaining sheet count table;
Fig. 4 illustrates how a total page count of pages to be printed varies when an inspection threshold is modified;
Fig. 5 illustrates a hardware configuration of the image forming system of the exemplary embodiment of the disclosure;
Fig. 6 is a block diagram illustrating a functional configuration of the image forming system of the exemplary embodiment of the disclosure;
Fig. 7 illustrates an example of a setting screen when a setting of an inspection threshold concerning a printing stain is received on an inspection controller;
Fig. 8 illustrates an example a printing stain location table;
Fig. 9 illustrates an example of an image density table;
Fig. 10 illustrates an example of a page configuration table;
Fig. 11 illustrates a display example of inspection results of an inspection performed with an inspection threshold set;
Fig. 12 illustrates an example of the update screen of an inspection level when the inspection threshold is modified to a higher value;
Fig. 13 is a flowchart illustrating a process flow when a printing operation responsive to a modified inspection threshold is simulated;
Fig. 14 is a flowchart illustrating a detailed operation that, as illustrated in a step of the flowchart in Fig. 13, recalculates a consumed amount of a consumable item in response to the modification of the inspection threshold;
Fig. 15 is a flowchart illustrating a detailed operation that, as illustrated in a step of the flowchart in Fig. 14, recalculates the consumed amount of the consumable item with a purge page added;
Fig. 16 is a flowchart illustrating a detailed operation that, as illustrated in a step of the flowchart in Fig. 14, recalculates the consumed amount of the consumable item with the purge page deleted;
Fig. 17 illustrates an example of the page configuration table that is created when the inspection threshold is modified to a higher value;
Fig. 18 illustrates an example of simulation results on a display screen that is displayed when the inspection threshold is modified to a higher value;
Fig. 19 illustrates an example of the display screen that is displayed when the inspection threshold is modified to a lower value;
Fig. 20 illustrates an example of the page configuration table that is created when the inspection threshold is modified to a lower value;
Fig. 21 illustrates an example of simulation results on a display screen that is displayed when the inspection threshold is modified to a lower value;
Fig. 22 illustrates an example of calculation of a purge page count when multiple print jobs are consecutive; and
Fig. 23 is a block diagram illustrating a functional configuration of an image forming system of a secondary exemplary embodiment of the disclosure.

### Detailed Description

An exemplary embodiment of the disclosure is described in detail below with reference to the drawings.

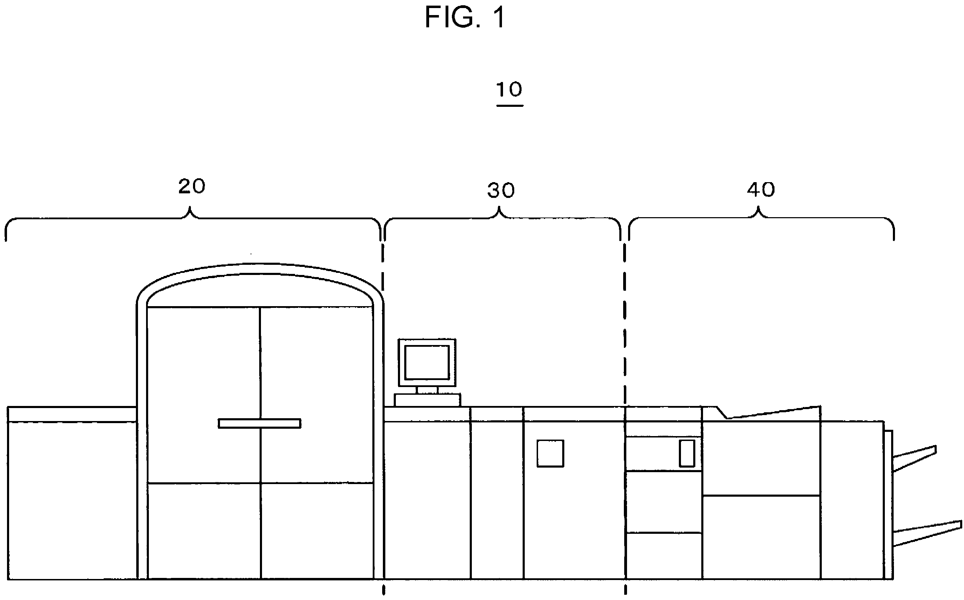

Fig. 1 illustrates a system configuration of an image forming system 10 of the exemplary embodiment of the disclosure.

As illustrated in Fig. 1, the image forming system 10 of the exemplary embodiment of the disclosure includes a printer 20, inspection apparatus 30 and post-process apparatus 40.

The printer 20 has a function of performing a printing operation that receives a paper sheet and prints an image onto the paper sheet. The inspection apparatus 30 receives the printed paper sheet and inspects the image printed on the paper sheet, namely, determines whether the image printed on the sheet paper has a printing stain, corner folding, misregistration or the like.

Specifically, the inspection apparatus 30 receives, as a reference image, image data corresponding to the image printed on the paper sheet by the printer 20, scans the image on the paper sheet after being printed by and transported from the printer 20, checks the scanned image with the received reference image and inspects whether the image printed on the transported paper sheet suffers from a fault.

The post-process apparatus 40 performs on the paper sheets inspected by the inspection apparatus 30 post-process operations including a folding operation, staple operation, punching operation, bookbinding operation and the like and then discharges the resulting paper sheets to a specified copy receiving tray. Alternatively, the inspection apparatus 30 may inspect the paper sheets after the post-process apparatus 40 performs the post-process operations.

If the inspection apparatus 30 has detected a fault on the paper sheet, the image forming system 10 performs an operation of switching a discharge destination of the paper sheet having the detected fault from a standard copy receiving tray to a copy receiving tray different from the standard copy receiving tray. However, in this operation described above, if a fault is detected from the page of the paper sheet serving as an inspection target and only that page is reprinted, the pages become out of order as a result and the printed material including multiple pages is not printed in a correct order.

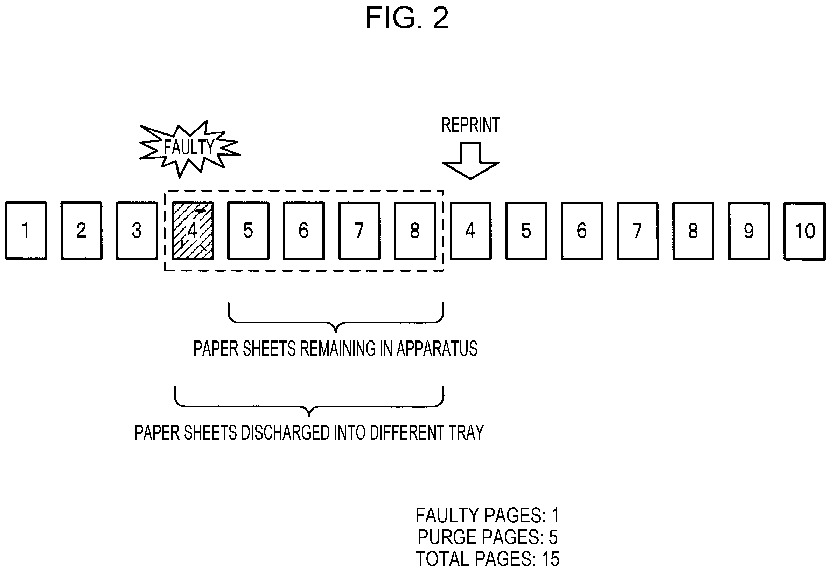

Referring to Fig. 2, for example, page 4 may be determined to be faultily printed as described below when 10 paper sheets having an A4 sheet size are printed.

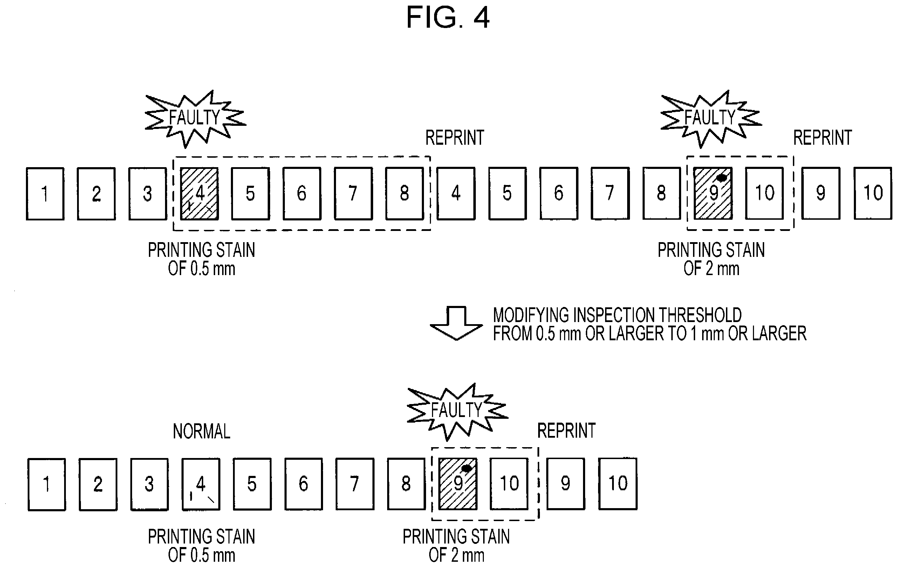

Since subsequent pages 5 through 8 have been printed, reprinting only page 4 determined to be faultily printed is not sufficient. If the inspection apparatus 30 has determined that page 4 is faultily printed, the printing of pages 5 through 8 has already been performed by the printer 20 and remain in the printer 20. Five paper sheets 4 through 8 may thus be discharged with the discharge destination switched to a purge copy receiving tray. Reprinting may start with page 4. For this reason, a total number of pages serving as paper sheets used to print 10 pages is 15. If the inspection apparatus 30 detects a printing fault on an image of a backward page of a print job, the number of pages printed and remaining in the printer 20 may be different from normal. For example, in the example of page 9 in Fig. 4, only pages 9 and 10 are discharged as purge pages after a printing fault is detected on the image on page 4. In this print job, 10 pages are finally printed without any following page to be printed.

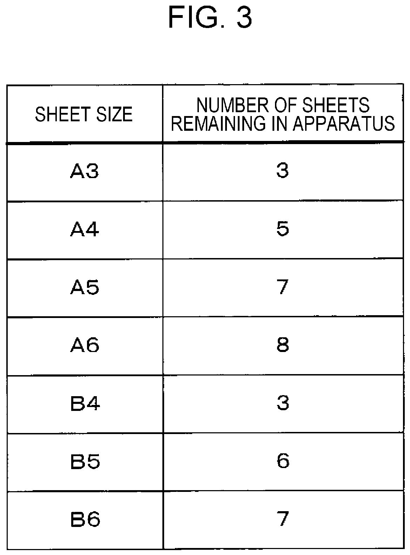

When a page is determined to be faultily printed, the number of paper sheets remaining in the printer 20 depends on the length of a paper transport path of the printer 20 and the size of each paper sheet. The image forming system 10 stores a remaining sheet count table illustrated in Fig. 3 and estimates the number of remaining sheets in view of the sheet size of a print job currently being printed. For example, if the sheet size is A4, the number of sheets remaining in the printer 20 is estimated to be 5.

If multiple pages including a page determined to be faultily printed are discarded and reprinting is performed, a consumed amount of a consumable item, such as toner or paper sheets, used in printing may be increased in comparison with the case in which reprinting is not performed. The reprinting leads to an increase in the number of paper sheets to be printed and thus a longer printing time. The printing time, toner and paper sheets are included in consumable items in the following discussion.

When the printed material described above is inspected, an inspection threshold is set. The inspection threshold is used to determine the type of fault and level of fault according to which a determination as to whether the printed material is normal or faulty is made.

As the inspection threshold serving as a criterion used to determine whether or not the printed material is good is higher, the printed material has a higher quality but reprinting of a page determined to be faultily printed leads to an increase in the consumed amount of a consumable item, such as print paper or toner. Conversely, if the inspection threshold is lower, the printed material has a lower quality.

Referring to Fig. 4, for example, a printing stain of a size of 0.5 mm is detected on the sheet of a page 4 and a printing stain of a size of 2 mm is detected on the sheet of page 9. A setting may be that if a printing stain of a size of 0.5 mm or larger serving as an inspection threshold is detected on a paper sheet, the paper sheet is determined to be faultily printed. In such a setting, paper sheets of seven pages, pages 4 through 8 and pages 9 and 10, are discarded, the consumed amount of the toner used to print the paper sheets to be discarded increases and the printing time is prolonged.

As illustrated in Fig. 4, a setting may be that if a stain of a size of 2 mm or larger serving as an inspection threshold is detected on a paper sheet, the paper sheet is determined to be faultily printed. In such a setting, even when a printing stain of a size of 0.5 mm occurs on the paper sheet of page 4, that paper sheet is determined to be normal. The paper sheets including pages 4 through 8 are not discarded. The consumed amount of the consumable item may thus vary depending on whether the inspection threshold is set to be higher or lower.

When the inspection threshold is set, the user has difficulty recognizing the consumed amount of the consumable item.

Through the process described below, the image forming system 10 of the exemplary embodiment may allow the user to recognize the consumed amount of the consumable item in the reprinting when the inspection threshold is set on the printed material.

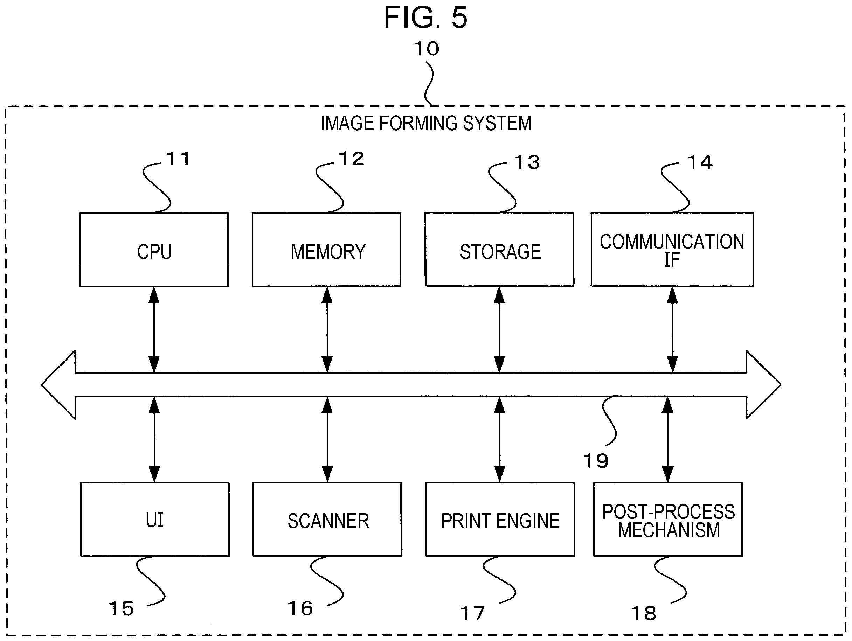

Fig. 5 illustrates a hardware configuration of the image forming system 10 of the exemplary embodiment of the disclosure. In the hardware configuration in Fig. 5, the image forming system 10 includes a single central process unit (CPU) for simplicity of explanation but each of the printer 20, inspection apparatus 30 and post-process apparatus 40 may have the hardware configuration illustrated in Fig. 5.

Referring to Fig. 5, the image forming system 10 incudes a CPU 11, memory 12, storage 13, such as a hard disk drive, communication interface (IF) 14 that transmits data to and/or receives data from an external apparatus via a network, user interface (UI) 15 including a keyboard and a touch panel or display, scanner 16, print engine 17, and post-process mechanism 18. These elements are interconnected to each other via a control bus 19.

The print engine 17 prints an image on a recording medium, such as a paper sheet, through charging, exposure, development, transfer, fixing and other operations. The recording medium may be any medium that allows an image to be printed thereon and, for example, is paper or film.

The CPU 11 is a processor that controls the operation of the image forming apparatus 10 by performing a predetermined process responsive to a control program stored on the memory 12 or storage 13. According to the exemplary embodiment, the CPU 11 reads the control program from the memory 12 or storage 13 and executes the read control program. The disclosure is not limited to this method. The control program may be delivered in a recorded form on a computer readable recording medium. For example, the control program may be delivered in a recorded form on an optical disc, such as a compact disc read-only memory (CD-ROM) or digital versatile ROM (DVD-ROM), or a semiconductor memory such as a universal serial bus (USB) memory or memory card. The control program may be delivered from an external apparatus via a communication network connected to the communication IF 14. The control program may be supplied as a single piece of application software or may be built in software serving as a function in each element of the image forming system 10.

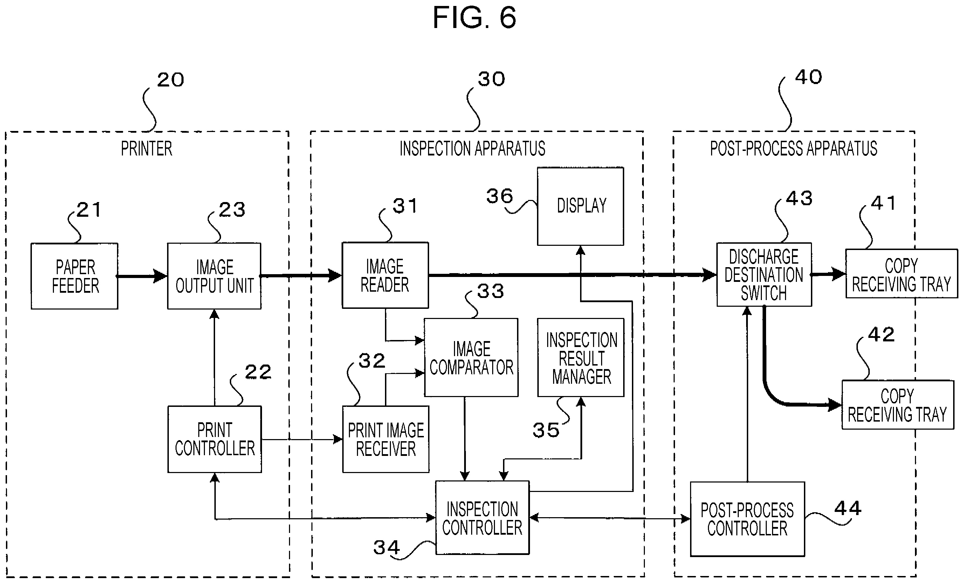

Fig. 6 is a block diagram illustrating a function configuration of the image forming system 10 that is implemented by performing the control program.

Referring to Fig. 6, the printer 20 in the image forming system 10 of the exemplary embodiment includes a paper feeder 21, print controller 22 and image output unit 23. The inspection apparatus 30 includes an image reader 31, print image receiver 32, image comparator 33, inspection controller 34, inspection result manager 35 and display 36. The post-process apparatus 40 includes copy receiving trays 41 and 42, discharge destination switch 43 and post-process controller 44.

The paper feeder 21 receives paper sheets to be printed and feeds each paper sheet to the image output unit 23. The image output unit 23 prints an image on the paper sheet transported from the paper feeder 21. The print controller 22 controls the operation of the image output unit 23, thereby performing a printing operation to print the image on the paper sheet. The print controller 22 also transmits, to the inspection controller 34 in the inspection apparatus 30, information on the image printed on the paper sheet.

The image reader 31 in the inspection apparatus 30 reads the image from the paper sheet on which the image output unit 23 has printed the image. The print image receiver 32 receives as a reference image a print image transmitted from the print controller 22.

To determine whether the image printed on the paper sheet has a problem, such as a printing fault, the image comparator 33 compares a scan image read by the image reader 31 with the reference image that is the print image received by the print image receiver 32. Specifically, the image comparator 33 compares the scan image with the reference image, thus detecting a variety of faults including a printing stain, faint print and toner fault on the printed paper sheet. The image comparator 33 may compare one of the images read by the image reader 31 as the reference image with another scan image.

The inspection controller 34 controls the operation of the inspection apparatus 30 and receives detection results from the image comparator 33 and inspects the printed image by determining whether a detected fault exceeds a preset inspection threshold. The inspection result manager 35 stores and manages the inspection results provided by the inspection controller 34.

The inspection controller 34 transmits the inspection results to the print controller 22 and post-process controller 44. Specifically, the inspection controller 34 transmits to the print controller 22 information indicating the page determined to be faultily printed and information indicating a page with which reprinting is to be started. The inspection controller 34 also transmits to the post-process controller 44 information indicating the page determined to be faultily printed and information indicating a purge page that is a page to be discarded before the reprinting is performed. The inspection controller 34 displays on the display 36 information including the consumed amount of the consumable item responsive to the inspection results acquired from the inspection result manager 35.

In the inspection apparatus 30 of the exemplary embodiment described herein, the consumed amount of the consumable item responsive to the inspection results is displayed on the display 36. The disclosure is not limited to this method. The image forming system 10 may be configurated such that the consumed amount of the consumable item responsive to the inspection results is displayed on a display screen of an external terminal apparatus, such as an personal computer connected to the image forming system 10. Not only the display 36 but also at least one of the print image receiver 32, image comparator 33, inspection controller 34 and inspection result manager 35 may be implemented by an external terminal apparatus connected to the image forming system 10.

The discharge destination switch 43 in the post-process apparatus 40 switches the discharge destination of the paper sheet transported from the inspection apparatus 30 between the copy receiving trays 41 and 42. The post-process controller 44 controls the operation of the post-process apparatus 40 and performs control to instruct the discharge destination switch 43 to switch the discharge destinations in response to information on the purge page transmitted from the inspection controller 34.

The print controller 22, inspection controller 34 and post-process controller 44 exchange information with each other to operate cooperatively and thus control the overall operation of the image forming system 10.

The post-process apparatus 40 thus constructed is controlled such that a paper sheet determined to be normal by the inspection apparatus 30 is discharged into the copy receiving tray 41 and a paper sheet determined to be faultily printed is discharged into the copy receiving tray 42.

The inspection controller 34 receives a setting that sets to a first threshold value an inspection threshold of an inspection that is to be performed on the printed material printed by the printer 20 and including multiple pages.

The inspection controller 34 identifies first reprint pages that include at least a page that is determined to be faultily printed through the inspection performed in accordance with the set first threshold value.

The inspection controller 34 displays on the display 36 a first consumed amount of the consumable item used in printing the first reprint pages.

The inspection controller 34 displays on the same screen of the display 36 a display that is used to receive the setting of the inspection threshold and a display of the first consumed amount.

The inspection controller 34 receives a setting that sets to a second threshold value an inspection threshold of an inspection that is to be performed on the printed material printed by the printer 20 and including multiple pages.

The inspection controller 34 identifies second reprint pages that include at least a page that is determined to be faultily printed through an inspection performed in accordance with the set second threshold value.

The inspection controller 34 may display on the display 36 a difference between a first consumed amount of the consumable item used in printing the first reprint pages and a second consumed amount of the consumable item used in printing the second reprint pages.

The inspection controller 34 displays on the same screen of the display 36 a display that is used to receive the setting of the inspection threshold and a display of the difference.

The first reprint pages include a page that is printed by the printer 20 and follows the page that is determined to be faultily printed through the inspection performed in accordance with the first threshold value.

The second reprint pages include a page that is printed by the printer 20 and follows the page that is determined to be faultily printed through the inspection performed in accordance with the second threshold value.

The inspection controller 34 displays on the display 36 a first page configuration of a page that is printed when the setting with the inspection threshold set to the first threshold value is received. The first page configuration includes the first reprint pages.

The inspection controller 34 displays on the display 36 a second page configuration of a page that is printed when the setting with the inspection threshold set to the second threshold value is received. The second page configuration includes the second reprint pages.

The inspection controller 34 receives the setting of the inspection threshold on each page of the printed material and inspect the page in accordance with the received inspection threshold on the page. Specifically, the inspection controller 34 may inspect each page by setting different inspection thresholds respectively on the pages instead of setting a single inspection threshold on the entire print job.

The inspection controller 34 displays on the display 36 a first waste paper rate serving as a ratio of a page count of the first reprint pages to a page count of the first page configuration.

The inspection controller 34 may display on the display 36 a difference between the first waste paper rate and a second waste paper rate serving as a ratio of a page count of the second reprint pages to a page count of the second page configuration.

The inspection controller 34 stores the first threshold value and the first waste paper rate in association with each other, calculates in accordance with the first waste paper rate the consumed amount of the consumable item that is estimated when a new printed material is inspected according to the first threshold value, and displays the consumed amount of the consumable item on the display 36.

The operation of the image forming system 10 of the exemplary embodiment is described in detail with reference to the drawings.

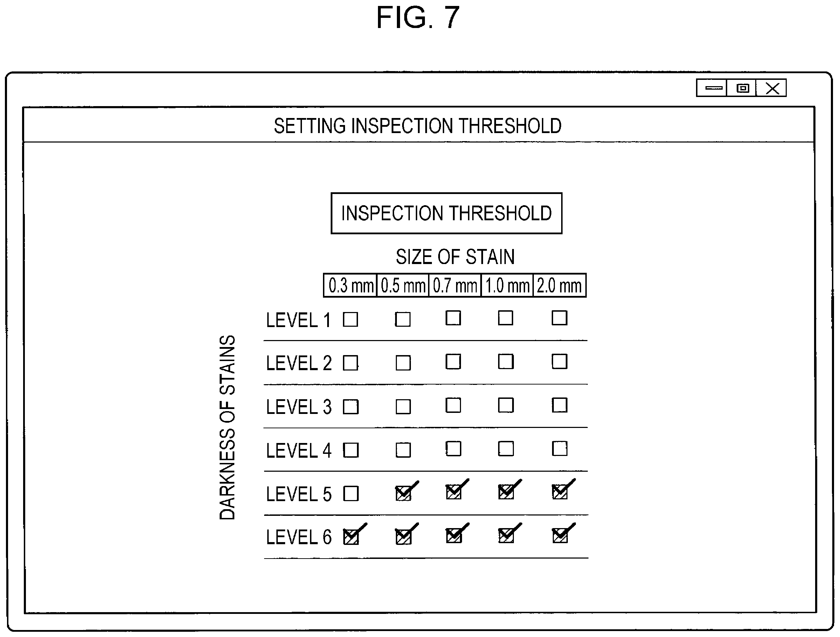

Fig. 7 illustrates an example of a setting screen displayed when the inspection controller 34 receives a setting of the inspection threshold concerning a printing stain is received.

Fig. 7 reveals that the setting of the darkness and size of printing stain is received as the inspection threshold. The darkness ranges from level 1 as the lightest level to level 6 as the darkest level. In the setting screen illustrated in Fig. 7, the inspection threshold is set such that concerning the darkness of printing stain at level 5, a printing stain of a size 0.5 mm or larger is determined to be faultily printed and such that concerning the darkness of printing stain at level 6, a printing stain of a size 0.3 mm or larger is determined to be faultily printed. The inspection threshold thus set is accepted as the first threshold value.

The inspection controller 34 receives inspection results of a printing stain location from the image comparator 33 and then identifies the first reprint pages including at least a page that is determined to be faultily printed through the inspection performed in accordance with the first threshold value.

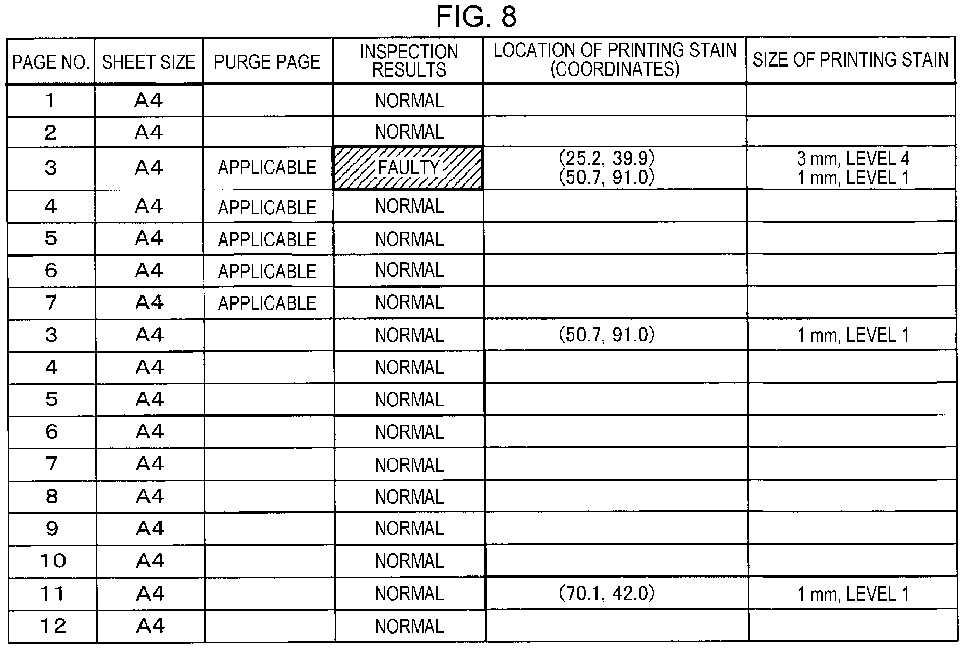

Specifically, the inspection controller 34 creates a printing stain location table illustrated in Fig. 8 in accordance with information on the printing stain location detected by the image comparator 33. The inspection controller 34 thus identifies the first reprint pages that include a page that is determined to be faultily printed through the inspection performed in accordance with the set first threshold value and a page that is printed by the printer 20 and follows the page determined to be faultily printed through the inspection.

In the printing stain location table illustrated in Fig. 8, page 3 is determined to be faultily printed since a printing stain of a size of 3 mm at level 4 on page 3 exceeds the inspection threshold. Fig. 8 reveals that pages 3 through 7, thus including page 3 having the print fault, are determined to be purge pages.

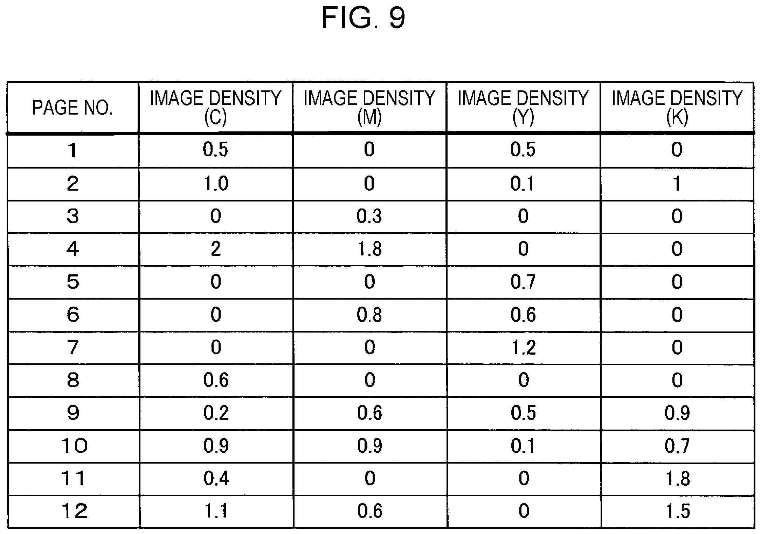

Information on the consumed amount of the toner used in printing each page may be used in order to calculate a first consumed amount of the consumable item used in printing the first reprint pages as the purge pages. The inspection controller 34 receives from the print controller 22 an image density table illustrated in Fig. 9. The image density table lists the density of an image on each page of a print job on each color of cyan (C), magenta (M), yellow (Y) and black (K). The density indicates a consumed amount of the toner and the image density table thus lists the consumed amount of the toner on a per page basis. In the image density table, the consumed amount of the toner is set to be 1 when printing is performed on a paper sheet of A4 sheet size with a density of 7.5%. In the image density table, the density is listed on each of the standard CMYK colors. Alternatively, the density of a special color, such as golden, silver or the like may be listed if the special color is used and the density of pressure bonding toner may be listed if the pressure bonding toner is used.

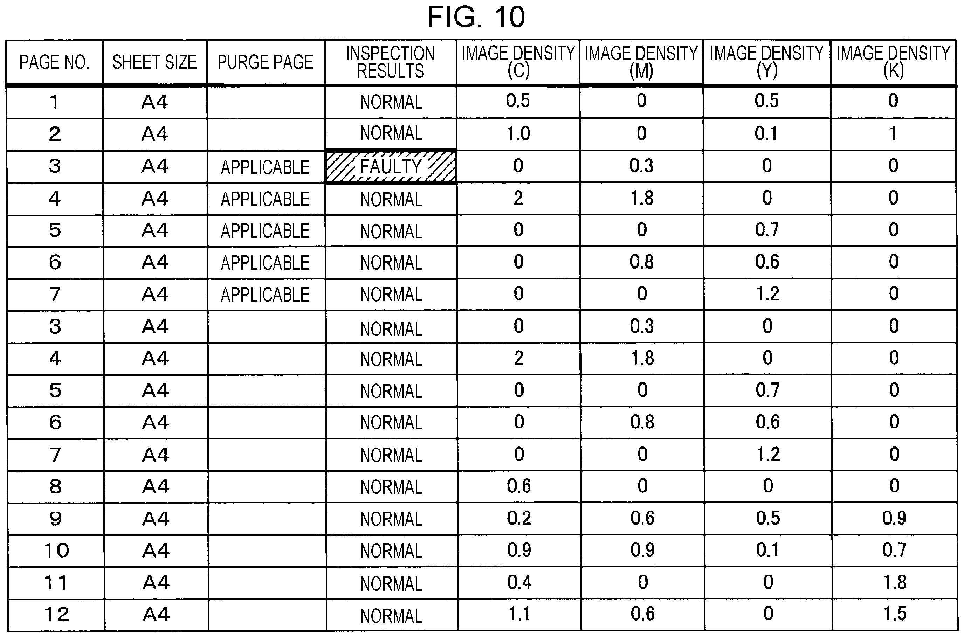

The inspection controller 34 creates a page configuration table illustrated in Fig. 10 in accordance with the printing stain location table illustrated in Fig. 8 and the image density table illustrated in Fig. 9. The page configuration table is made by listing the image density of each of the CMYK colors of each of the pages actually printed in reprinting. The consumed amount of the toner actually used is calculated by calculating a cumulative value of the densities of each of the CMYK colors. Specifically, the inspection controller 34 may calculate the consumed amount of the toner used in printing the purge pages serving as the first reprint pages by accumulating on each of the CMYK colors the values of the image densities on page 3 through 7 as the purge pages. The inspection controller 34 may calculate the consumed amount of each toner used in printing all pages to be printed, by accumulating on each of the CMYK colors the values of the image densities on all pages of the page configuration table.

By referring to the page configuration table, the inspection controller 34 may calculate the number of unsuccessful results, namely, the number of faulty pages determined to be faultily printed, the number of purge pages that are pages to be discarded and the total number of pages of the paper sheets to be printed. The inspection controller 34 also calculates a waste paper rate that is a ratio of the number of purge pages to the total number of pages.

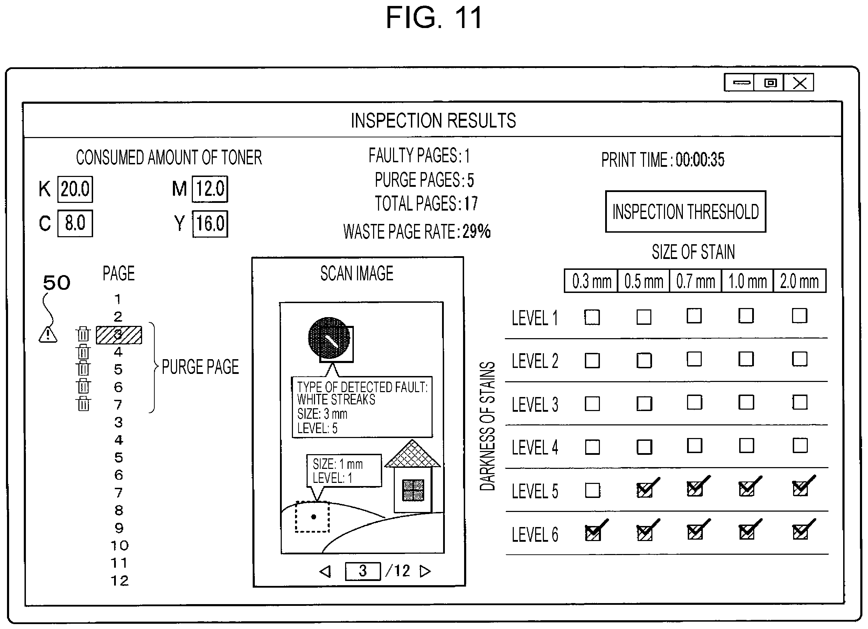

The inspection controller 34 displays on the display 36 information, as a result of calculation, on the number of faulty pages, number of purge pages, total number of pages, waste paper rate and consumed amount of the toner of each color. Fig. 11 illustrates the inspection results obtained when the inspection is performed in accordance with the set inspection threshold. Specifically, the displayed information includes not only information on the consumed amount of the toner of each of the CMYK colors, number of faulty pages, number of purge pages, total number of pages and waste paper rate and but also information on page configuration of the pages to be printed. In the display example illustrated in Fig. 11, symbol number 50 indicates that page 3 is a faulty print page. The display in Fig. 11 also reveals that pages 3 through 7 are purge pages to be discarded.

The display example in Fig. 11 enables the user to view a scan image, specifically displays page 3 to cause the user to recognize a detected print stain. The display example in Fig. 11 reveals that a printing stain of a size of 3 mm at level 5 and a printing stain of a size of 1 mm at level 1 are detected on page 3. A solid-lined box enclosing the printing stain of a size of 3 mm at level 5 indicates that the inspection threshold is exceeded. A broken-lined box enclosing the printing stain of a size of 1 mm at level 1 indicates that the inspection threshold is not exceeded. Information on print time when printing is performed under the state described above is also illustrated in the display example in Fig. 11.

The inspection result manager 35 stores and manages, as the inspection results, the printing stain location table in Fig. 8, the image density table in Fig. 9 and the page configuration table in Fig. 10.

According to the exemplary embodiment, the simulation of the printing operation with a modified inspection threshold after the printing is performed with one inspection threshold set may be performed.

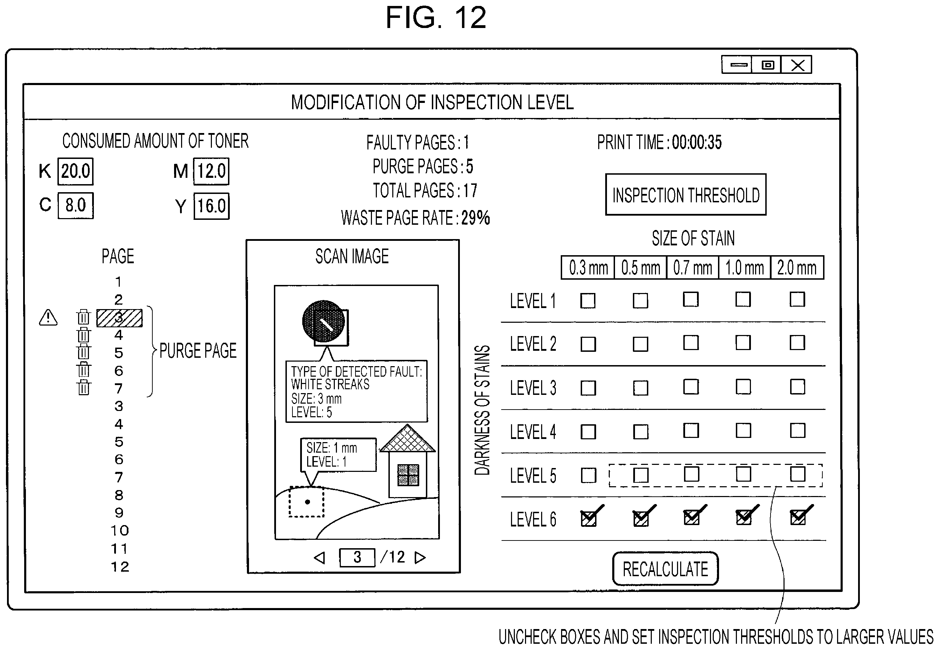

When the simulation is performed, the user shifts to a modification screen of the inspection level as illustrated in Fig. 12 and then modifies the inspection level, namely, the inspection threshold.

Fig. 12 illustrates the display screen used to modify the inspection threshold to a higher value. Specifically, the user may modify the inspection threshold to a higher value by unchecking the check boxes set at level 5 of the darkness of printing stain. When the user presses an operation button "Recalculate" after the modification of the inspection threshold, the inspection in accordance with the modified inspection threshold may be simulated.

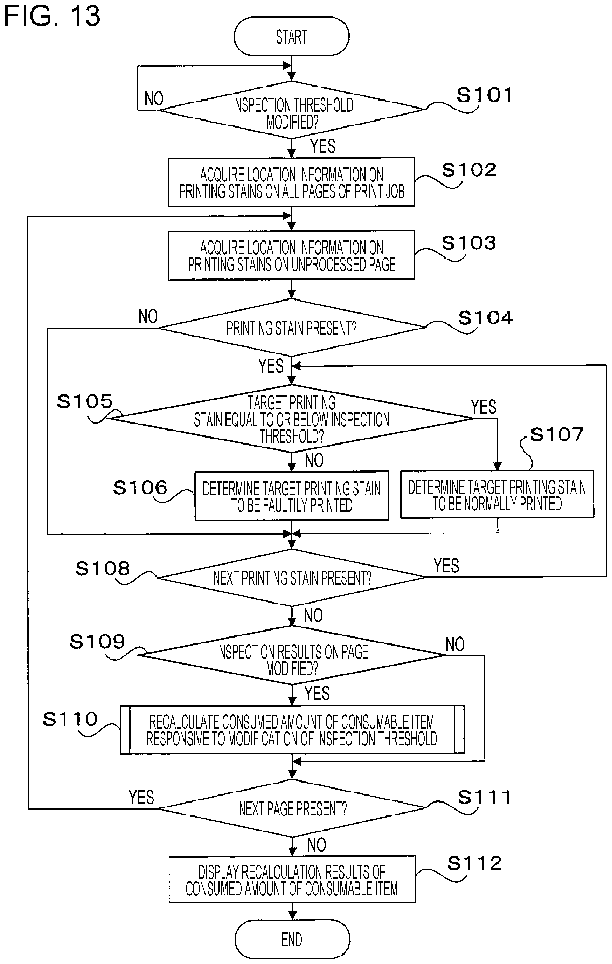

Fig. 13 is a flowchart illustrating a process flow when a printing operation responsive to a modified inspection threshold is simulated.

If the inspection threshold is modified in step S101, the inspection controller 34 acquires printing stain location information on all pages of a print job, namely, the printing stain location table illustrated in Fig. 8 from the inspection result manager 35 in step S102.

In step S103, the inspection controller 34 acquires the printing stain location information on one unprocessed page from the printing stain location table in step S103.

In step S104, the inspection controller 34 determines whether the acquired printing stain location information indicates a printing stain.

If it is determined in step S104 that the acquired printing stain location information indicates a printing stain, the inspection controller 34 determines in step S105 whether the size or darkness of the printing stain is higher than a modified inspection threshold.

If it is determined in step S105 that the size or darkness of a printing stain of interest is lower than or equal to the modified inspection threshold, the inspection controller 34 determines in step S107 that the page having the print stain of interest is not faultily printed. If it is determined in step S105 that the size or darkness of the printing stain of interest is higher than the modified inspection threshold, the inspection controller 34 determines in step S 106 that the page having the print stain of interest is faultily printed.

If it is determined in step S104 that the acquired printing stain location information indicates no printing stain, the inspection controller 34 determines in step S108 whether the printing stain location information indicates a next printing stain.

If it is determined in step S108 that the printing stain location information indicates a next printing stain, the inspection controller 34 iterates operations in steps S104 through S107.

If it is determined in step S108 that the printing stain location information indicates no next printing stain, the inspection controller 34 determines in step S109 whether there is a modification in the inspection results of the page. The modification in the inspection results of the page may be the case where the inspection results have changed from faulty printing to normal printing or from normal printing to faulty printing.

If it is determined in step S109 that there is a modification in the inspection results of the page, the inspection controller 34 recalculates the consumed amount of the consumable item in step S 110.

After the operation in step S110 or the determination operation in step S109 indicating that there is no modification in the inspection results of the page, the inspection controller 34 determines in step S 111 whether the printing stain location table lists a next page.

If it is determined in step S 111 that a next page is listed in the printing stain location table, the inspection controller 34 returns to step S103.

If it is determined in step S 111 that the printing stain location table lists no next page, the inspection controller 34 displays in step S112 on the display 36 recalculation results of the consumed amount of the consumable item responsive to the modified inspection threshold.

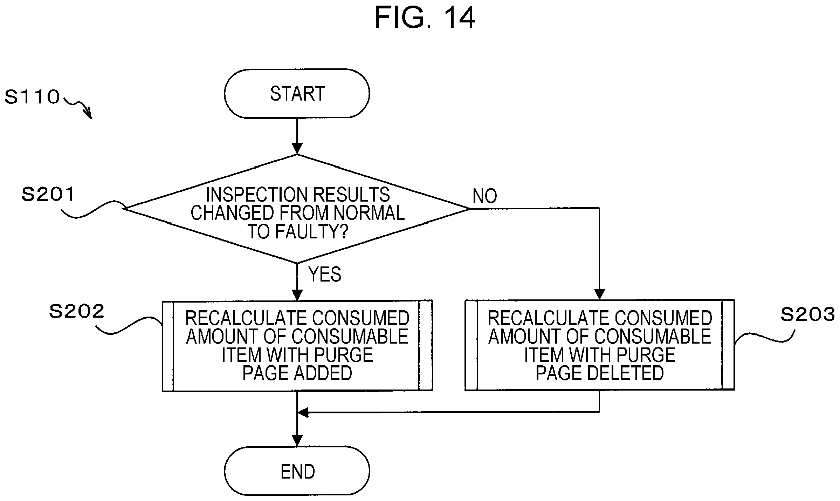

Fig. 14 is a flowchart illustrating in detail the operation that is illustrated in step S 110 in the flowchart in Fig. 13 and recalculates the consumed amount of the consumable item responsive to the modified inspection threshold.

In the recalculation responsive to the modified inspection threshold, the inspection controller 34 determines in step S201 whether the inspection results of the page currently being processed have changed from normal printing to unsuccessful printing.

If it is determined in step S201 that the inspection results of the page currently being processed have changed from normal printing to unsuccessful printing, the inspection controller 34 performs in step S202 recalculation with a purge page added to the page configuration table.

If it is determined in step S201 that the inspection results have changed from unsuccessful printing to normal printing, the inspection controller 34 performs in step S203 the recalculation with the purge page deleted from the page configuration table.

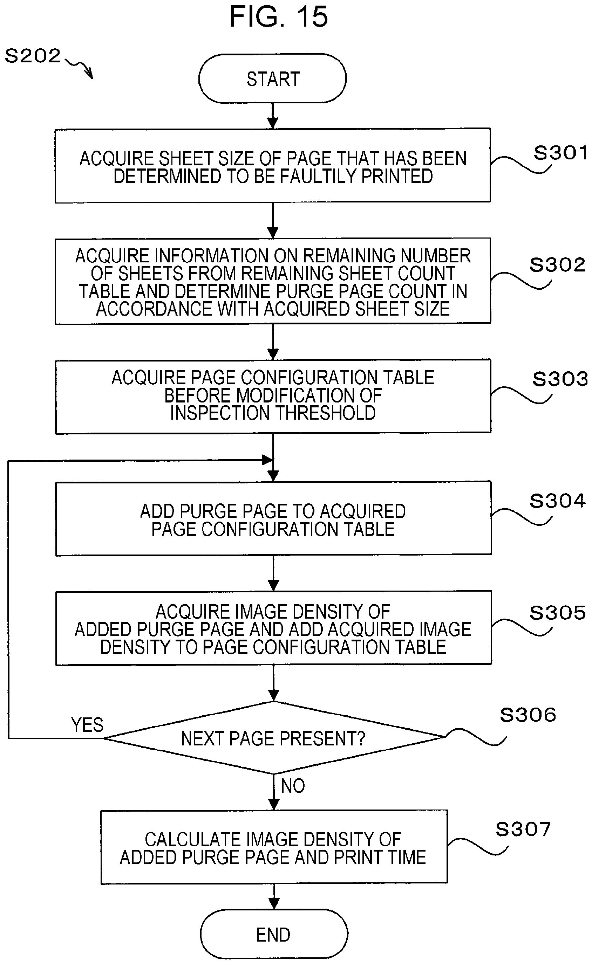

Fig. 15 is a flowchart illustrating in detail the operation that is illustrated in step S202 in the flowchart in Fig. 14 and recalculates the consumed amount of the consumable item with the purge page added.

In step S301, the inspection controller 34 acquires information on the sheet size of the page determined to be faultily printed.

In step S302, the inspection controller 34 determines the number of purge pages by acquiring information on the remaining number of sheets from a remaining sheet count table in accordance with the acquired sheet size.

The inspection controller 34 acquires in step S303 from the inspection result manager 35 the page configuration table prior to the modification of the inspection threshold.

The inspection controller 34 adds in step S304 the purge page to the acquired page configuration table.

In step S305, the inspection controller 34 acquires information on an image density of the added purge page from the image density table and adds to the page configuration table the acquired information as image density information on the purge page added to the page configuration table.

The inspection controller 34 determines in step S306 whether a next purge page is present. If it is determined in step S306 that a next purge page is present, the inspection controller 34 returns to step S304.

If it is determined in step S306 that no next purge page is present, the inspection controller 34 calculates in step S307 the image density and print time of the added purge page.

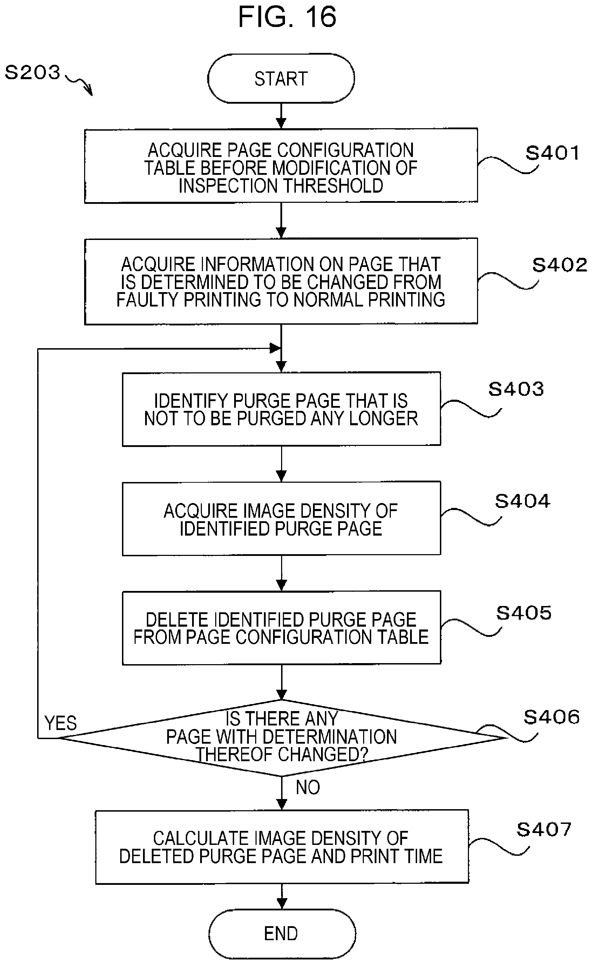

Fig. 16 is a flowchart illustrating in detail the operation that is illustrated in step S203 in the flowchart in Fig. 14 and recalculates the consumed amount of the consumable item with the purge page deleted.

The inspection controller 34 acquires in step S401 the page configuration table prior to the modification of the inspection threshold from the inspection result manager 35.

The inspection controller 34 acquires in step S402 information on a page that is determined to be changed to normal printing from faulty printing.

The inspection controller 34 identifies in step S403 a purge page that is not to be purged any longer.

The inspection controller 34 acquires in step S404 information on the image density of the identified purge page from the image density table.

The inspection controller 34 deletes in step S405 the identified purge page from the page configuration table.

The inspection controller 34 determines in step S406 whether there is another page having the changed determination results. If it is determined in step S406 that another page having the changed determination results is present, the inspection controller 34 returns to step S403.

If it is determined in step S406 that there is no other page having the changed determination results, the inspection controller 34 calculates in step S407 the image density and print time of the deleted purge page.

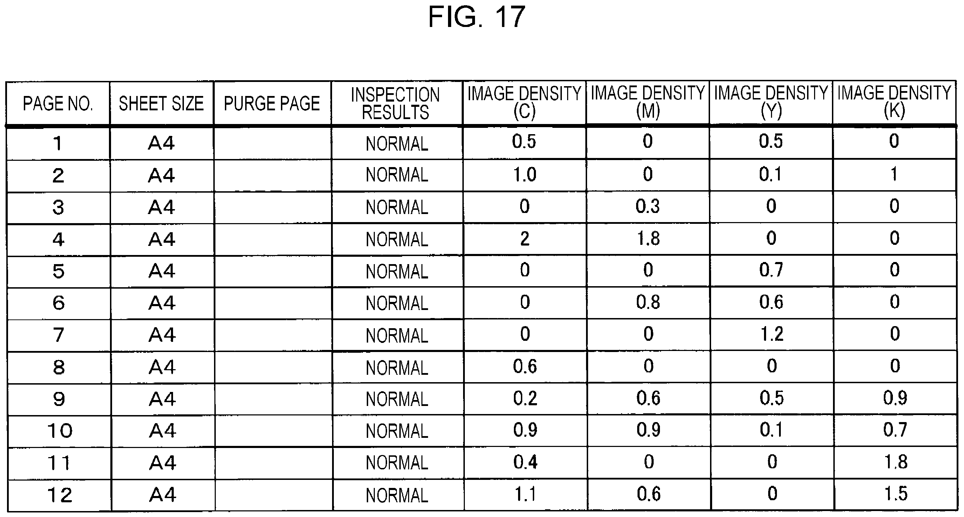

Fig. 17 illustrates an example of the page configuration table created when the inspection threshold is modified to a higher value on the display screen illustrated in Fig. 12.

The page configuration table illustrated in Fig. 17 reveals that, after the modification of the inspection threshold to a higher value, no faultily printed page is present any longer and thus no purge page is present any longer.

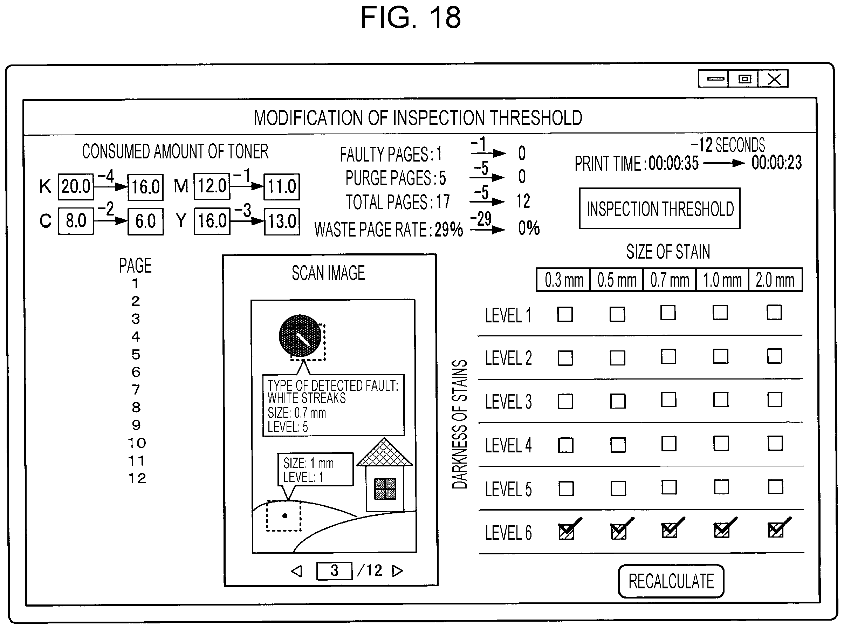

Fig. 18 illustrates an example of simulation results that is displayed on the display screen illustrated in Fig. 12 when the inspection threshold is modified to a higher value.

The display screen illustrated in Fig. 18 reveals that the modification of the inspection threshold to a higher value causes to be reduced each value of the number of faulty pages, number of purge pages, total number of pages, waste paper rate, consumed amount of the toner of each color and print time.

For example, the display screen illustrated in Fig. 18 reveals that the consumed amount of the K toner is reduced by 4.0 from 20.0 to 16.0 and also reveals that the consumed amounts of the M toner, C toner and Y toner prior to the modification of the inspection threshold, the consumed amounts of the M toner, C toner and Y toner subsequent to the modification of the inspection threshold and the amounts of reduction in the consumed amounts of the M toner, C toner and Y toner.

The display screen illustrated in Fig. 18 reveals that how each value of the number of faulty pages, number of purge pages, total number of pages, waste paper rate, consumed amount of the toner of each color and print time is reduced after the inspection threshold is modified and thus reveals the differences of these parameter between before and after the modification.

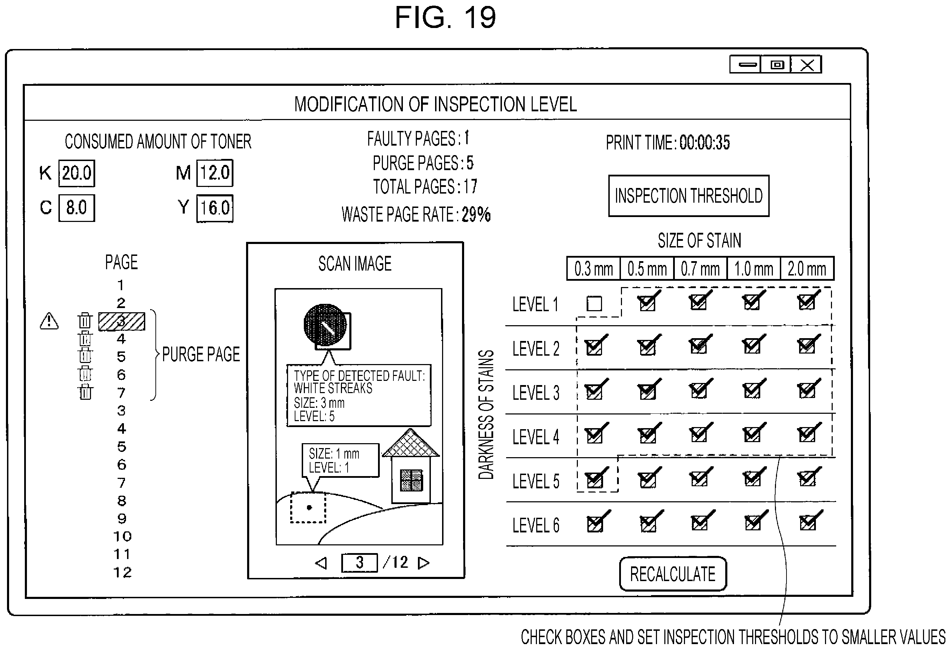

Fig. 19 illustrates an example of the display screen when the inspection threshold is modified to a lower value. In the example of the display screen illustrated in Fig. 9, the inspection threshold is reduced to a lower value by checking the check boxes set at the printing stain darkness levels 1 through 5. When the user presses the "Recalculate" button after the modification of the inspection threshold, the inspection results may be simulated in accordance with the modified inspection threshold.

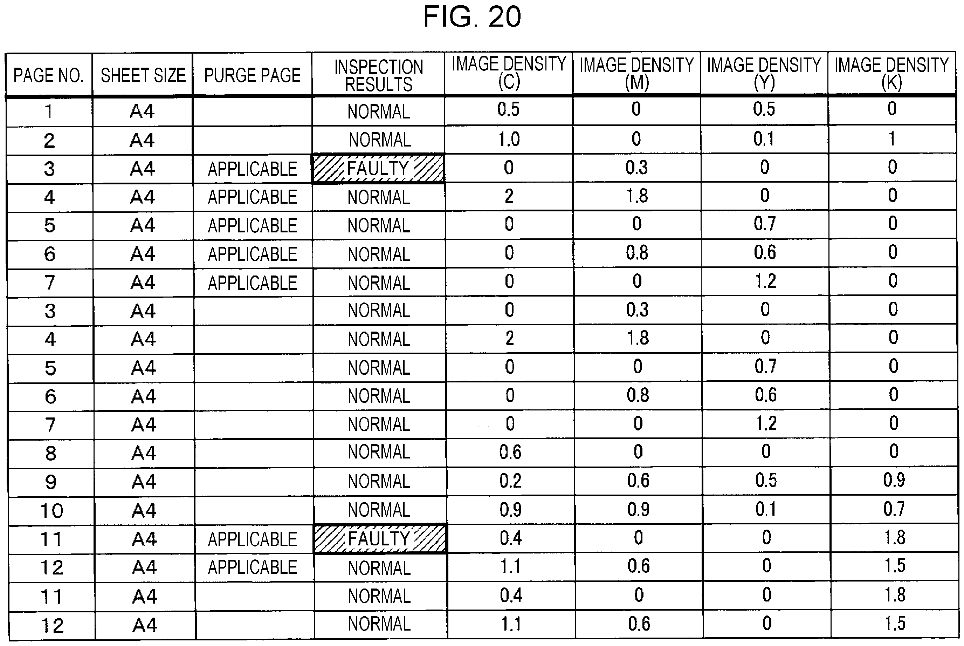

Fig. 20 illustrates an example of the page configuration table that is created when the inspection threshold is modified through the process described above to a lower value on the display screen illustrated in Fig. 19.

In the page configuration table illustrated in Fig. 20, the modification of the inspection threshold to a lower value causes not only page 3 but also page 11 to be determined to be faultily printed. Page 11 determined to be faultily printed reveals that the number of purge pages is increased by 2.

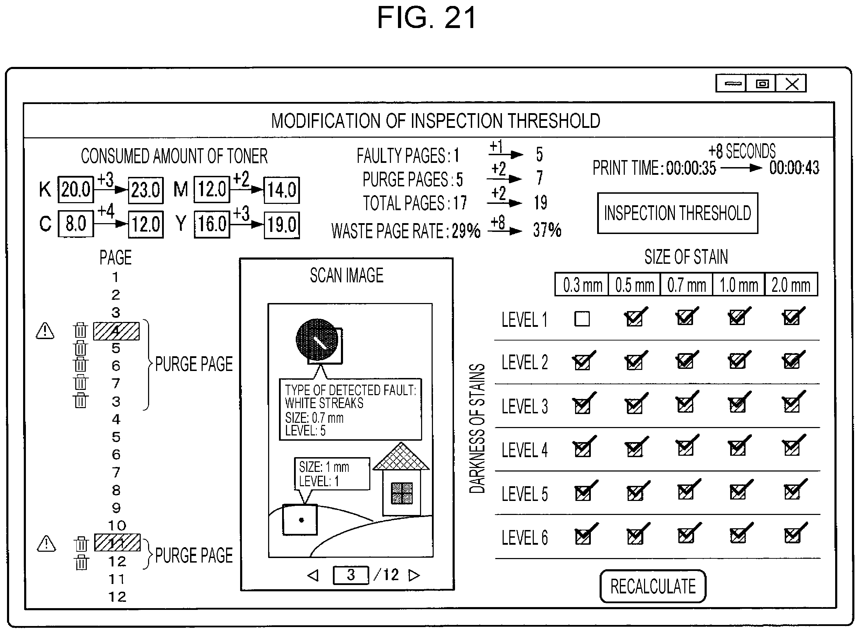

Fig. 21 illustrates an example of simulation results on a display screen that is displayed when the inspection threshold is modified to a lower value on the display screen illustrated in Fig. 19.

The display screen illustrated in Fig. 21 reveals that the modification of the inspection threshold to a lower value causes to be increased each value of the number of faulty pages, number of purge pages, total number of pages, waste paper rate, consumed amount of the toner of each color and print time.

For example, the display screen illustrated in Fig. 21 indicates that the consumed amount of the K toner is increased by 3.0 from 20.0 to 23.0 and also indicates that the consumed amounts of the M toner, C toner and Y toner prior to the modification of the inspection threshold, the consumed amounts of the M toner, C toner and Y toner subsequent to the modification of the inspection threshold and the amounts of increase in the consumed amounts of the M toner, C toner and Y toner.

The display screen illustrated in Fig. 21 indicates how each value of the number of faulty pages, number of purge pages, total number of pages, waste paper rate, consumed amount of the toner of each color and print time is increased after the inspection threshold is modified and thus reveals the differences of these parameter between before and after the modification.

As described above, a single print job is performed. If multiple print jobs are consecutively performed, there is a possibility that a page near the last page is faultily printed. In such a case, a paper sheet of the next print job may be included as a purge page.

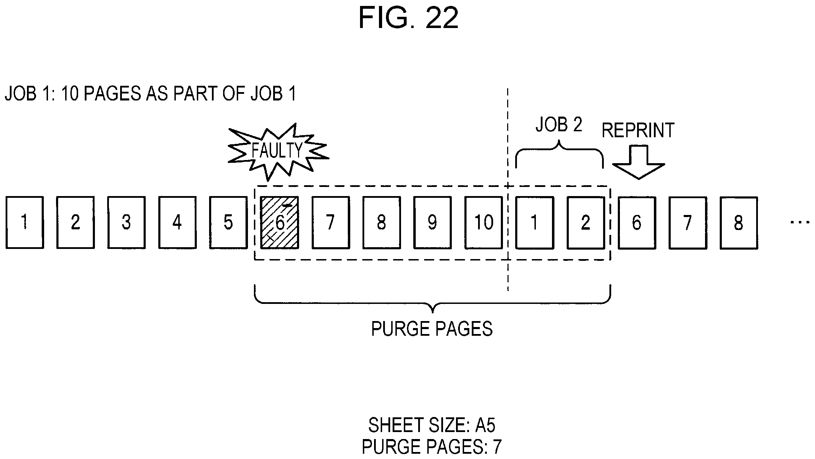

The inspection controller 34 thus performs the simulation in view of the paper sheets of the next print job as illustrated in Fig. 22.

Fig. 22 reveals that print jobs 1 and 2 are consecutively performed, page 6 of print job 1 is determined to be faultily printed, the number of purge pages is 7, including pages 6 through 10 of the print job 1 and pages 1 and 2 of the print job 2.

In the above discussion of the exemplary embodiment, with a print job having a purge page in the printing operation, the simulation results with the inspection threshold modified are displayed. Alternatively, simulation results for a print job may be displayed by performing proof printing on the print job with no purging setting.

According to the exemplary embodiment, an increase or decrease in the consumed amount of the toner responsive to the modification of the inspection threshold is calculated and displayed but alternatively the consumed amount of the toner may be converted into an amount of money and then displayed. In such a case, a unit price may be set on each type of toner of CMYK and an amount of money that accounts for a difference between the unit prices may be displayed.

According to the exemplary embodiment, an increase or decrease in the consumed amount of the consumable item responsive to the modification of the inspection threshold is calculated and displayed but alternatively an increase or decrease in power consumption or carbon dioxide emission responsive to the modification of the inspection threshold may be calculated and displayed.

The inspection controller 34 may store on the inspection result manager 35, in an associated form, the set inspection threshold and the waste paper rate at which the inspection is performed in accordance with the inspection threshold. In accordance with the waste paper rate stored in association with the inspection threshold, the inspection controller 34 may calculate the consumed amount of the consumable item that is estimated when a new printed material is inspected at the stored inspection threshold. For example, if the waste paper rate with the inspection performed at a given inspection threshold is 10%, the inspection controller 34 displays, on the display 36, 100 (1000 x 10%) as the number of purge pages, which is estimated when a new printed material of 1000 pages is inspected at the inspection threshold. Alternatively, the inspection controller 34 may acquire a mean image density of a new printed material and display, on the display 36, the consumed amount of the toner which is estimated when the new printed material is inspected using a product of an estimated number of purge pages and the mean image density.

### Second Exemplary Embodiment of the Disclosure

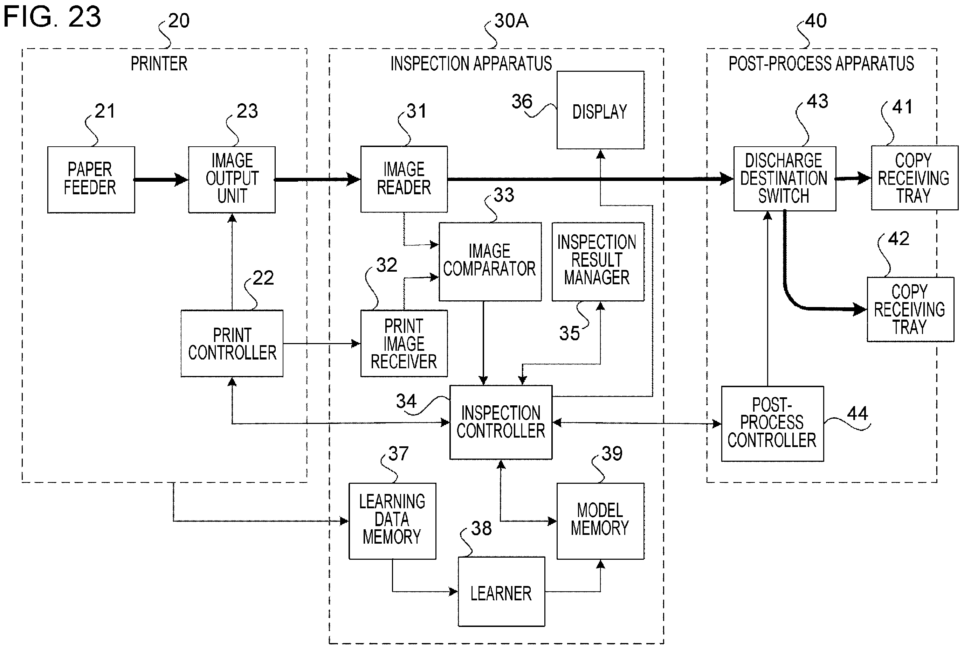

An image forming system of a second exemplary embodiment of the disclosure includes a printer 20, inspection apparatus 30A and post-process apparatus 40 as illustrated in Fig. 23. In Fig. 23, elements identical to those described above are designated with the same reference numerals and the discussion thereof is omitted herein.

The inspection apparatus 30A of the second exemplary embodiment includes a learning data memory 37, learner 38 and model memory 39 in addition to the elements in the inspection apparatus 30 in the image forming system 10 illustrated in Fig. 6.

The inspection controller 34 of the second exemplary embodiment identifies the first reprint pages using a learned model that is constructed such that a probability at which each page of a print job is determined to be faultily printed is output when information on the print job and a threshold value of an inspection are input to the learning model and the inspection controller 34 thus predicts a consumed amount of toner that is expected when a new printed material is inspected. It is noted that the reprint pages identified herein may not be necessarily printed in an actual print job.

The learning data memory 37 stores learning data used to construct the learning model. The learning data includes information on a print job processed in the past, threshold values of inspections and results of the inspections.

The inspection controller 34 collects from the printer 20 or an information processing apparatus managing the printer 20 the information on the print job processed in the past and from the inspection result manager 35 the threshold values and the results of the inspections performed on the print job in the past and the inspection controller 34 then stores the collected information on the learning data memory 37.

The information on the print job includes information on a type of paper sheets used in the print job, type of the printed materials printed in the print job, and each page configurating the print job and information on the printer processing the print job. One page may configurate the print job. The information on the type of paper sheets used in the print job may include information identifying paper, for example, indicating whether paper is plain paper or thick paper, or information indicating characteristics of paper, such as area, thickness or weight of the paper sheet. The information on the printed material may include information identifying the type of the printed material printed through the print job, for example, information identifying posters or flyers. The information on the page configurating the print job includes information on an image density or object on each page configurating the print job or information on a print setting. Specifically, the information on the object indicates the number, size and position of images or texts arranged on a page and the information on the print setting indicates simplex or duplex setting. The information on the printer performing the print job includes information identifying the printer. The results of the inspection performed on the print job include a ratio of each page configurating the print job determined to be faultily printed. The ratio of each page configurating the print job determined to be faultily printed may be determined by dividing the number of times of each page determined to be faultily printed by the number of copies of corresponding page.

In accordance with the learning data stored on the learning data memory 37, the learner 38 constructs a neural network model that receives, as an input, information on a print job and a threshold value of an inspection performed on the print job and outputs a probability at which each page configurating the print job corresponding to the information on the received print job and the threshold value of the inspection is determined to be faulty and the learner 38 then stores the constructed neural network model on the model memory 39.

Specifically, the learner 38 inputs to the neural network model the information on the print job and the threshold value of the inspection included in the learning data and acquires, as an output from the neural network model, the probability at which each page configurating the print job is determined to be faultily printed. The learner 38 compares the ratio of each page of the learning data determined to be faultily printed with the probability at which the acquired page is determined to be faultily printed. The learner 38 updates parameters of the neural network model such that an error is minimized.

Correlation of a variety of information included in the information on the print job and the threshold value of the inspection and the probability at which each page configurating the print job is determined to be faultily printed is described below.

The trend of whether each page is determined to be faultily printed is different depending on the type of paper sheets used in the print job. For example, a thin paper sheet more easily shows through and may thus be more likely determined to be faultily printed than a thicker paper sheet. The degree of ink bleeding and fixability of toner are different depending on the material of the paper sheet and the probability at which the page is determined to be faultily printed is also different depending on the material of the paper sheet. In this way, the type of the paper sheet used in the print job and the probability at which each page configurating the print job is determined to be faultily printed are correlated.

The probability at which each page configurating the print job is determined to be faultily printed is different depending on the image density of the page configurating the print job. For example, stains on a page having a higher image density of color and a larger blackened portion may be difficult to recognize and the page is less likely determined to be faultily printed than a page free from a higher image density of color and a larger blacked portion. A monochrome print job is narrower in color gamut than a color print job and is thus less likely determined to be faultily printed. In this way, the image density of each page configurating the print job and the probability at which each page configurating the print job is determined to be faultily printed are correlated.

The probability at which each page configurating the print job is determined to be faultily printed is different depending on the information on the object on each page configurating the print job. For example, the trend of the faulty-print determination is different from a page having an object of more complex design to a page having an object of simpler design. In this way, the information on the object on each page configurating the print job and the probability at which the page is determined to be faultily printed are correlated.

The probability at which each page configurating the print job is determined to be faultily printed is different depending on a print setting on the page. For example, duplex printing is more likely to have shown through than simplex printing and thus a duplex printed page is more likely determined to be faultily printed. In this way, the information on the print setting on each page configurating the print job and the probability at which each page configurating the print job is determined to be faultily printed are correlated.

The probability at which each page configurating the print job is determined to be faultily printed is different depending on a printer performing the print job. Printers are different in characteristics, for example, one printer has a higher print speed but a lower printing accuracy and another printer has a lower print speed but a higher printing accuracy. Depending on the printing method of each printer, such as a toner printing method or an ink-jet printing method, printers may be different in terms of the possibility of occurrence of show through. The probability at which the page is determined to be faultily printed is thus different depending on the type of a printer and the type of printing method of the printer. The information on the printer performing the print job and the probability at which the page is determined to be faultily printed are thus correlated.

In response to the reception of the information on a new print job, the inspection controller 34 inputs to the learning model stored on the model memory 39 the information on the new print job and the threshold value of the inspection, thereby estimating the probability at which each page configurating the new print job is determined to be faultily printed.

Specifically, the inspection controller 34 converts a variety of information and the threshold value of the inspection included in the information on the received print job into data in terms of a data structure (scaler values and vectors) compatible with the learned neural network model and estimates in response to an output from the learned model the probability at which each page configurating the new print job is determined to be faultily printed.

In accordance with the estimated probability at which each page is determined to be faultily printed and the number of copies of the new print job, the inspection controller 34 calculates the number of sheets of each page configurating the new print job determined to be faultily printed. The inspection controller 34 identifies the reprint pages of the new print job in accordance with the calculated number of sheets of each page determined to be faultily printed and the remaining sheet count table illustrated in Fig. 3. The inspection controller 34 may display on the display 36 a consumed amount of toner that is expected when the new printed material is inspected in view of the identified reprint pages and the image density of each page.

The learning data memory 37, learner 38 and model memory 39 may be mounted in an information processing apparatus connected to the inspection apparatus 30A. All of the above-described information on the print job may not necessarily used as the learning data and the learning model may be constructed using some of the information on the print job.

In the exemplary embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiments above, and may be changed.

In the exemplary embodiments described above, a color difference between a portion of the printing stain in the scan image and a portion of a reference image corresponding to the portion of the printing stain may be measured, and the inspection may be performed in accordance with the measured color difference and the inspection threshold may be set for the color difference.

The term "system" in the exemplary embodiments signifies a system including a single apparatus or multiple apparatuses.

### Modifications

According to the exemplary embodiment, the disclosure is applied to the image forming system 10 including the printer 20. The disclosure is not limited to this configuration. The disclosure may also be applied to a configuration that inspects the printed material described with reference to an information processing system, such as a personal computer.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   receive a setting that sets to a first threshold value an inspection threshold of an inspection that is performed on a printed material printed by a printer and including multiple pages;
   identify first reprint pages including at least a page that is determined to be faultily printed through the inspection that is performed in accordance with the first threshold value; and
   display a first consumed amount serving as a consumed amount of a consumable item that is used in printing the first reprint pages.
(((2))) In the information processing system according to (((1))), the processor is configured to display on the same screen a display that receives the setting of the inspection threshold and a display of the first consumed amount.
(((3))) In the information processing system according to one of (((1))) and (((2))), the first reprint pages include a page that is printed by the printer and follows the page that is determined to be faultily printed through the inspection performed in accordance with the first threshold value.
(((4))) In the information processing system according to one of (((1))) through (((3))), the processor is configured to:
   display a first page configuration of a page that is printed when the setting with the inspection threshold set to the first threshold value is received,
   wherein the first page configuration includes the first reprint pages.
(((5))) In the information processing system according to one of (((1))) through (((4))), the processor is configured to receive the setting of the inspection threshold on each page of the printed material and inspect the page in accordance with the received inspection threshold on the page.
(((6))) In the information processing system according to (((4))), the processor is configured to display a first waste paper rate serving as a ratio of a page count of the first reprint pages to a page count of the first page configuration.
(((7))) In the information processing system according to (((6))), the processor is configured to:
   store the first threshold value and the first waste paper rate in association with each other; and
   display in accordance with the first waste paper rate the consumed amount of the consumable item that is estimated when a new printed material is inspected in accordance with the first threshold value.
(((8))) An information processing system including:
   a processor configured to:
   receive a setting that sets to a first threshold value an inspection threshold of an inspection that is performed on a printed material printed by a printer and including multiple pages;
   identify first reprint pages including at least a page that is determined to be faultily printed through the inspection that is performed in accordance with the first threshold value;
   receive a setting that sets the inspection threshold to a second threshold value;
   identify second reprint pages including at least a page that is determined to be faultily printed through the inspection that is performed in accordance with the second threshold value; and
   display a difference between a first consumed amount serving as a consumed amount of a consumable item used in printing the first reprint pages and a second consumed amount serving as a consumed amount of the consumable item used in printing the second reprint pages.
(((9))) In the information processing system according to (((8))), the processor is configured to display on the same screen a display that receives the setting of the inspection threshold and a display of the difference.
(((10))) In the information processing system according to one of (((8))) and (((9))), the first reprint pages include a page that is printed by the printer and follows the page that is determined to be faultily printed through the inspection performed in accordance with the first threshold value, and
   the second reprint pages include a page that is printed by the printer and follows the page that is determined to be faultily printed through the inspection performed in accordance with the second threshold value.
(((11))) In the information processing system according to one of (((8))) through (((10))), the processor is configured to:
   display a first page configuration of a page that is printed when the setting with the inspection threshold set to the first threshold value is received;
   display a second page configuration of a page that is printed when the setting with the inspection threshold set to the second threshold value is received,
   wherein the first page configuration includes the first reprint pages, and
   wherein the second page configuration includes the second reprint pages.
(((12))) In the information processing system according to one of (((8))) through (((11))), the processor is configured to receive the setting of the inspection threshold on each page of the printed material and inspect the page in accordance with the received inspection threshold on the page.
(((13))) In the information processing system according to (((11))), the processor is configured to display a difference between a first waste paper rate serving as a ratio of a page count of the first reprint pages to a page count of the first page configuration and a second waste paper rate serving as a ratio of a page count of the second reprint pages to a page count of the second page configuration.
(((14))) In the information processing system according to (((13))), the processor is configured to:
   store the first threshold value and the first waste paper rate in association with each other; and
   display in accordance with the first waste paper rate the consumed amount of the consumable item that is estimated when a new printed material is inspected in accordance with the first threshold value.
(((15))) A program causing a computer to execute a process including:
   receiving a setting that sets to a first threshold value an inspection threshold of an inspection that is performed on a printed material printed by a printer and including multiple pages;
   identifying first reprint pages including at least a page that is determined to be faultily printed through the inspection that is performed in accordance with the first threshold value; and
   displaying a first consumed amount serving as a consumed amount of a consumable item that is used in printing the first reprint pages.
(((16))) A program causing a computer to execute a process including:
   receiving a setting that sets to a first threshold value an inspection threshold of an inspection that is performed on a printed material printed by a printer and including multiple pages;
   identifying first reprint pages including at least a page that is determined to be faultily printed through the inspection that is performed in accordance with the first threshold value;
   receiving a setting that sets the inspection threshold to a second threshold value;
   identifying second reprint pages including at least a page that is determined to be faultily printed through an inspection that is performed in accordance with the second threshold value; and
   displaying a difference between a first consumed amount serving as a consumed amount of a consumable item used in printing the first reprint pages and a second consumed amount serving as a consumed amount of the consumable item used in printing the second reprint pages.
(((17))) In the information processing system according to (((1))), the processor is configured to:
   receive information on a new print job; and
   identify the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.
(((18))) In the information processing system according to (((17))), the information on the print job includes information on a page configurating the print job, and
   the information on the new print job includes information on a page configurating the new print job.
(((19))) In the information processing system according to (((18))), the information on the page configurating the print job includes information on an image density, information on an object or information on a print setting on the page configurating the print job.
(((20))) In the information processing system according to (((18))), the information on the print job includes information on a type of a paper sheet used in the print job or information on a printer performing the print job, and
   the information on the new print job includes information on a type of a paper sheet used in the new print job or information on a printer performing the new print job.
(((21))) In the information processing system according to one of (((17))) through (((20))), a result of the inspection of the print job includes a probability at which each page configurating the print job is determined to be faultily printed,
   the result of the inspection of the new print job includes a probability at which each page configurating the new print job is determined to be faultily printed, and
   the processor is configured to identify the first reprint pages in accordance with the number of copies of the new print job and the probability at which the page configurating the new print job is determined to be faultily printed.
(((22))) In the information processing system according to (((21))), the processor is configured to output the probability at which the page configurating the new print job is determined to be faultily printed, by inputting the information on the received new print job and the first threshold value to the learned model that is learned in advance such that the result of the inspection of the print job is output when the information on the print job and the threshold value of the inspection of the print job are input to the learned model.
(((23))) In the program according to (((15))), the process further includes receiving information on a new print job,
   wherein identifying the first reprint pages including at least the page that is determined to be faultily printed through the inspection that is performed in accordance with the first threshold value includes identifying the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.

Effects of the configurations described in the appendix are described below.

In the information processing system according to (((1))), the consumed amount of the consumable item used in reprinting may be recognized when the inspection threshold is set.

In the information processing system according to (((2))), the inspection threshold may be set with the consumed amount of the consumable item used in the reprinting being verified.

In the information processing system according to (((3))), the consumed amount of the consumable item may be recognized when both the page determined to be faultily printed and the subsequent page are reprinted.

In the information processing system according to (((4))), the configuration of the page to be printed may be recognized when the inspection threshold is set.

In the information processing system according to (((5))), the inspection matching the page may be performed.

In the information processing system according to (((6))), the waste paper rate may be recognized when the inspection threshold is set.

In the information processing system according to (((7))), the estimated consumed amount of the consumable item may be recognized before the printing of a new print product is performed.

In the information processing system according to (((8))), how the consumed amount of the consumable item varies is recognized when the inspection threshold is modified.

In the information processing system according to (((9))), the inspection threshold may be modified with the difference between the consumed amounts of the consumable item used in the reprinting being verified.

In the information processing system according to (((10))), the difference between the consumed amounts of the consumable item used in the reprinting may be recognized when both the page determined to be faultily printed and the subsequent page are reprinted.

In the information processing system according to (((11))), a change in the configuration of the page to be printed in response to the modification of the inspection threshold may be recognized.

In the information processing system according to (((12))), the inspection threshold may be set in view of the page.

In the information processing system according to (((13))), the difference between the waste paper rates may be recognized when the inspection threshold is modified.

In the information processing system according to (((14))), the estimated consumed amount of the consumable item may be recognized before the printing of the new print product is performed.

In the program according to (((15))), the consumed amount of the consumable item used in the reprinting may be recognized when the inspection threshold is set.

In the program according to (((16))), how the consumed amount of the consumable item varies with the inspection threshold modified may be recognized.

In the information processing system according to (((17))), the reprint pages may be identified without inspecting each page of the new print job.

In the information processing system according to (((18))), the reprint pages may be identified in accordance with the information on the page configurating the print job without inspecting the page of the new print job.

In the information processing system according to (((19))), the reprint pages may be identified without inspecting each page of the new print job in accordance with the information on the image density, the information on the object or the information on the print setting on each page configurating the print job.

In the information processing system according to (((20))), the reprint pages may be identified without inspecting each page of the new print job in accordance with the information on the type of the paper sheet used in the print job or the information on the printer performing the print job.

In the information processing system according to (((21))), the reprint pages may be identified without inspecting each page of the new print job in accordance with the probability at which the page configurating the new print job is determined to be faultily printed.

In the information processing system according to (((22))), the probability at which each page configurating the new print job is determined to be faultily printed may be output without inspecting each page of the new print job.

In the program according to (((23))), the reprint pages may be identified without inspecting each page of the new print job.

## Claims

1. An information processing system comprising:
a processor configured to:
receive a setting that sets to a first threshold value an inspection threshold of an inspection that is performed on a printed material printed by a printer and including a plurality of pages;
identify first reprint pages including at least a page that is determined to be faultily printed through the inspection that is performed in accordance with the first threshold value; and
display a first consumed amount serving as a consumed amount of a consumable item that is used in printing the first reprint pages.

2. The information processing system according to claim 1, wherein the processor is configured to display on the same screen a display that receives the setting of the inspection threshold and a display of the first consumed amount.

3. The information processing system according to one of claims 1 and 2, wherein the first reprint pages comprise a page that is printed by the printer and follows the page that is determined to be faultily printed through the inspection performed in accordance with the first threshold value.

4. The information processing system according to one of claims 1 through 3, wherein the processor is configured to:
display a first page configuration of a page that is printed when the setting with the inspection threshold set to the first threshold value is received,
wherein the first page configuration comprises the first reprint pages.

5. The information processing system according to one of claims 1 through 4, wherein the processor is configured to receive the setting of the inspection threshold on each page of the printed material and inspect the page in accordance with the received inspection threshold on the page.

6. The information processing system according to claim 4, wherein the processor is configured to display a first waste paper rate serving as a ratio of a page count of the first reprint pages to a page count of the first page configuration.

7. The information processing system according to claim 6, wherein the processor is configured to:
store the first threshold value and the first waste paper rate in association with each other; and
display in accordance with the first waste paper rate the consumed amount of the consumable item that is estimated when a new printed material is inspected in accordance with the first threshold value.

8. An information processing system comprising:
a processor configured to:
receive a setting that sets to a first threshold value an inspection threshold of an inspection that is performed on a printed material printed by a printer and including a plurality of pages;
identify first reprint pages including at least a page that is determined to be faultily printed through the inspection that is performed in accordance with the first threshold value;
receive a setting that sets the inspection threshold to a second threshold value;
identify second reprint pages including at least a page that is determined to be faultily printed through the inspection that is performed in accordance with the second threshold value; and
display a difference between a first consumed amount serving as a consumed amount of a consumable item used in printing the first reprint pages and a second consumed amount serving as a consumed amount of the consumable item used in printing the second reprint pages.

9. The information processing system according to claim 8, wherein the processor is configured to display on the same screen a display that receives the setting of the inspection threshold and a display of the difference.

10. The information processing system according to one of claims 8 and 9, wherein the first reprint pages include a page that is printed by the printer and follows the page that is determined to be faultily printed through the inspection performed in accordance with the first threshold value, and
wherein the second reprint pages include a page that is printed by the printer and follows the page that is determined to be faultily printed through the inspection performed in accordance with the second threshold value.

11. The information processing system according to one of claims 8 through 10, wherein the processor is configured to:
display a first page configuration of a page that is printed when the setting with the inspection threshold set to the first threshold value is received;
display a second page configuration of a page that is printed when the setting with the inspection threshold set to the second threshold value is received,
wherein the first page configuration includes the first reprint pages, and
wherein the second page configuration includes the second reprint pages.

12. The information processing system according to one of claims 8 through 11, wherein the processor is configured to receive the setting of the inspection threshold on each page of the printed material and inspect the page in accordance with the received inspection threshold on the page.

13. The information processing system according to claim 11, wherein the processor is configured to display a difference between a first waste paper rate serving as a ratio of a page count of the first reprint pages to a page count of the first page configuration and a second waste paper rate serving as a ratio of a page count of the second reprint pages to a page count of the second page configuration.

14. The information processing system according to claim 13, wherein the processor is configured to:
store the first threshold value and the first waste paper rate in association with each other; and
display in accordance with the first waste paper rate the consumed amount of the consumable item that is estimated when a new printed material is inspected in accordance with the first threshold value.

15. A program causing a computer to execute a process comprising:
receiving a setting that sets to a first threshold value an inspection threshold of an inspection that is performed on a printed material printed by a printer and including a plurality of pages;
identifying first reprint pages including at least a page that is determined to be faultily printed through the inspection that is performed in accordance with the first threshold value; and
displaying a first consumed amount serving as a consumed amount of a consumable item that is used in printing the first reprint pages.

16. A program causing a computer to execute a process comprising:
receiving a setting that sets to a first threshold value an inspection threshold of an inspection that is performed on a printed material printed by a printer and including a plurality of pages;
identifying first reprint pages including at least a page that is determined to be faultily printed through the inspection that is performed in accordance with the first threshold value;
receiving a setting that sets the inspection threshold to a second threshold value;
identifying second reprint pages including at least a page that is determined to be faultily printed through an inspection that is performed in accordance with the second threshold value; and
displaying a difference between a first consumed amount serving as a consumed amount of a consumable item used in printing the first reprint pages and a second consumed amount serving as a consumed amount of the consumable item used in printing the second reprint pages.

17. The information processing system according to claim 1, wherein the processor is configured to:
receive information on a new print job; and
identify the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.

18. The information processing system according to claim 17, wherein the information on the print job includes information on a page configurating the print job, and
wherein the information on the new print job includes information on a page configurating the new print job.

19. The information processing system according to claim 18, wherein the information on the page configurating the print job comprises information on an image density, information on an object or information on a print setting on the page configurating the print job.

20. The information processing system according to claim 18, wherein the information on the print job includes information on a type of a paper sheet used in the print job or information on a printer performing the print job, and
wherein the information on the new print job includes information on a type of a paper sheet used in the new print job or information on a printer performing the new print job.

21. The information processing system according to one of claims 17 through 20, wherein a result of the inspection of the print job includes a probability at which each page configurating the print job is determined to be faultily printed,
wherein the result of the inspection of the new print job includes a probability at which each page configurating the new print job is determined to be faultily printed, and
wherein the processor is configured to identify the first reprint pages in accordance with a number of copies of the new print job and the probability at which the page configurating the new print job is determined to be faultily printed.

22. The information processing system according to claim 21, wherein the processor is configured to output the probability at which the page configurating the new print job is determined to be faultily printed, by inputting the information on the received new print job and the first threshold value to the learned model that is learned in advance such that the result of the inspection of the print job is output when the information on the print job and the threshold value of the inspection of the print job are input to the learned model.

23. The program according to claim 15, wherein the process further comprises receiving information on a new print job, and
wherein identifying the first reprint pages including at least the page that is determined to be faultily printed through the inspection that is performed in accordance with the first threshold value includes identifying the first reprint pages in response to a result of an inspection of the new print job that is obtained by inputting the information on the received new print job and the first threshold value to a learned model that is learned in advance such that a result of an inspection of a print job is output when information on the print job and a threshold value of the inspection of the print job are input to the learned model.
